# EUROPEAN PATENT SPECIFICATION

(11) **EP 2 785 019 B1**
(45) Date of publication and mention of the grant of the patent: **27.05.2015**
(21) Application number: 14158670.1
(22) Date of filing: 10.03.2014
(51) Int. Cl.: H04L 29/08, H04L 12/58

(54) **Managing mobile telecommunication devices with a general purpose messaging transport protocol in digital cellular telecommunication networks**
Verwaltung mobiler Telekommunikationsvorrichtungen mit einem Mehrzwecknachrichtenübermittlungsprotokoll in digitalen zellularen Kommunikationsnetzen
Gestion de dispositifs de télécommunication mobile de messagerie avec un protocole de messagerie à usage général dans des réseaux de télécommunication cellulaire numérique

(30) Priority: 11.03.2013 US 201313794289
(43) Date of publication of application: 01.10.2014
(73) Proprietor: SAP SE, 69190 Walldorf (DE)
(72) Inventor: Jain, Shashank Mohan, 69190 Walldorf (DE); Challa, Srinivasa Reddy, 69190 Walldorf (DE)
(74) Representative: Richardt Patentanwälte PartG mbB

(56) References cited:
- US-A1- 2005 149 529
- US-A1- 2012 254 362
- Miguel Almedia and Alfredo Matos: "Bridging the devices with the web cloud: A restful managementarchitecture over XMPP" In: Jonathan Rodriguez: "Mobile Multimedia Communications: 6th International ICST Conference, MOBIMEDIA 2010, Lisbon, Portugal, September 6-8, 2010", 17 November 2012 (2012-11-17), Springer, XP009179757, ISBN: 3642351549 pages 136-150, DOI: 10.1007/978-3-642-35155-6_12, * Abstract * * page 136, section 1"Introduction"-page 137, last paragraph * * page 138, paragraph 3-page 140, last paragraph * * page 142, paragraph 2-page 145, last paragraph *
- WALCZAK D ET AL: "Machine-to-Machine communication and data processing approach in Future Internet applications", COMMUNICATION SYSTEMS, NETWORKS&DIGITAL SIGNAL PROCESSING (CSNDSP), 2012 8TH INTERNATIONAL SYMPOSIUM ON, IEEE, 18 July 2012 (2012-07-18), pages 1-5, XP032237121, DOI: 10.1109/CSNDSP.2012.6292779 ISBN: 978-1-4577-1472-6
- CHUNYAN FU ET AL: "RESTful web services for bridging presence service across technologies and domains: an early feasibility prototype", IEEE COMMUNICATIONS MAGAZINE, IEEE SERVICE CENTER, PISCATAWAY, US, vol. 48, no. 12, 1 December 2010 (2010-12-01), pages 92-100, XP011340433, ISSN: 0163-6804, DOI: 10.1109/MCOM.2010.5673078

## Description

### Background

Traditionally, mobile telecommunication devices are managed using a Server/Client agent design paradigm. The server agent is configured to remotely control and monitor the mobile telecommunication devices via a client agent deployed on smart phones. Such control and monitoring is particularly important for business organizations that have personnel deployed in the field with smart phones. However, current monitoring and control systems that use Server/Client agents are limited by scalability and cost factors. For bottom of the pyramid solutions, it would be helpful if there was a mobile telecommunication device management application for monitoring and controlling mobile telecommunication devices that is scalable and low in cost.

The manuscript "Bridging the Devices with the Web Cloud: A Restful Management Architecture over XMPP" discloses a Cloud Bridge Server, which uses the Extensible Messaging and Presence Protocol (XMPP) to interact with the devices, and which provides a Representational State Transfer (REST) API for 3rd party Web Services (M. Almeida, A. Matos, "Bridging the Devices with the Web Cloud: A Restful Management Architecture over XMPP," Mobile Multimedia Communications, Lecture Notes of the Institute for Computer Sciences, Social Informatics and Telecommunications Engineering Volume 77, 2012, pp 136-150).

The US 20120254362 A1 discloses a method to transport Hypertext Transfer Protocol (HTTP) over XMPP, including: forming a first two-level URI template to identify web resources accessible by use of HTTP in an XMPP network, wherein a first level is XMPP-formatted and a second level is HTTP-formatted; binding HTTP to XMPP <message> and <iq> stanzas; transmitting the HTTP messages in those stanzas; receiving a HTTP messages in those stanzas; and a XMPP mechanism to discover if an XMPP entity supports transporting HTTP over XMPP.

The manuscript "Machine-to-Machine communication and data processing approach in Future Internet applications" discloses applications using XMPP for communication and Complex Event Processing (CEP) for handling data streams (D.Walczak, M.Wrzos, A.Radziuk, B.Lewandowski, and C.Mazurek, "Machine-to-Machine communication and data processing approach in Future Internet applications", proceedings of 8th International Symposium on Communication systems, Networks Digital Signal Processing (CSNDSP), pp. 1-5, CSNDSP.

### Summary

As usual mobile telecommunication device management uses Client/Server architecture using protocols like HTTP which block the server sockets until the required actions initiated by the client or the server is completed. In such a configuration clients can make call to server easily, but if a server has to talk to client then client also should be run as lightweight server for the original sever to initiate the call. This limits the server capability to handle the number of clients and clients are also are bit heavy with lightweight server component running. A Microsoft System Center Configuration Manager 2007 is a typical example of a system having aforementioned limitations.

The present invention provides for embodiments that fill the need of effective and secure computer architecture for monitoring and controlling of the mobile telecommunication devices. Preferred embodiments are described in the corresponding dependent claims. Certain embodiments are based on utilization of a general purpose messaging protocol, such as for instance XMPP, being a bi-directional non-blocking asynchronous protocol, enabling (XMPP) Agents installed on the server and clients to talk each other in seamless asynchronous manner. This means that (XMPP) agent on server or client can initiate a call by sending the required message to a message broker and close the call, while the message broker makes call to counter-party agent(s) and pass on requested message and closes the call. The counterparty agent(s) processes the messages and makes call back to the message broker and gives back response and closes the call and the message broker then pass on the response(s) from the counter party agent(s) to the original client which made the call. As a result thereof there are no persistent connections between agents and hence this architecture can support a very big number of clients and can be scaled easily.

The invention is disclosed in the appended claims.

It should be appreciated that the present invention can be implemented in numerous ways, including as a telecommunication method, an apparatus, a mobile telecommunication device, a method of operating of the mobile telecommunication device, one or more computer readable non-transitory storage media embodying computer instructions for performing each of aforementioned methods. Several inventive embodiments are described below.

Representational state transfer application program interfaces (REST API) is understood here as type of Web Service that exposes possible system functionalities that other systems (programs) and users via various user interfaces can use to issue commands, access information or change the state of the system etc.

REST client is understood here as the program used to invoke REST API for specific operation to be performed. The REST API can be directly invoked by users via user interfaces as well.

One embodiment provides for a server cluster comprising a mobile telecommunication device management server and a fan-out server. The mobile device management server comprises a computer microprocessor configured to: receive commands issued by users (135) or REST clients designated for mobile telecommunication devices for operating of the mobile telecommunication devices, wherein each mobile telecommunication device is configured to execute one or more commands designated for the each mobile telecommunication device and generate data by execution of said one or more external commands; upon the receipt of the command issued by either one of the users or one of the REST clients activate a respective REST API (131) of the mobile telecommunication device management server, wherein the respective REST API enables forwarding of said received external command to a XMPP agent (110) of the mobile telecommunication device management server after processing of said command by a service layer component (132) of the mobile telecommunication device management server, wherein the mobile telecommunication device management server comprises a plurality of the REST APIs and the commands issued by the users or by the REST clients are grouped in groups and each group has the respective REST API; cause the service layer component to process the command designated for one or more of the mobile telecommunication devices, wherein the processing of the command by the service layer component comprises generating one or more XMPP messages in a format of the XMPP protocol, wherein as a result thereof each designated mobile device has at least one respective XMPP message designated for it comprising the command converted by using data being specific for operating of the each designated mobile telecommunication device; cause the XMPP agent of the mobile telecommunication device management server to send one or more XMPP messages designated for one or more of the mobile telecommunication devices to the fan-out server via bidirectional sockets of said XMPP agent and the fan-out server using the XMPP protocol; cause the XMPP agent of the mobile telecommunication device management server to receive one or more XMPP messages designated for the mobile telecommunication device management server from the fan-out server via the bidirectional sockets of said XMPP agent and the fan-out server using the XMPP protocol; forward one or more XMPP messages received by the XMPP agent of the mobile telecommunication device management server from the XMPP agent of the mobile telecommunication device management server to the service layer component; cause the service layer component to process one or more XMPP messages forwarded from the XMPP agent of the mobile telecommunication device management server to the service layer component.

The processing of said one or more XMPP messages comprises the following in a case when said one or more XMPP messages comprise data generated by execution of one of the commands issued either by one of the users or by the one of the REST clients on one or more of the mobile telecommunication devices for which said command was designated: retrieving said data from said one or more XMPP messages; and forwarding at least a portion of said data via the one of the REST APIs to either said user or to said REST client, wherein said REST API was activated upon the receipt of said command.

The fan-out server comprises a computer microprocessor configured to: receive the XMPP messages designated for the mobile telecommunication devices from the XMPP agent (110) of the mobile telecommunication device management server via the bidirectional sockets of the fan-out server and the XMPP agent of the mobile telecommunication device management server using the XMPP protocol; dispatch the XMPP messages to respective XMPP agents (122) of the designated mobile telecommunication devices (120A....120N) using the XMPP protocol via a cellular digital telecommunication network and bidirectional sockets of said XMPP agents and fan-out server, wherein each mobile telecommunication device has the respective XMPP agent being configured to enable receiving the dispatched XMPP messages designated for the each mobile telecommunication device via the bidirectional sockets of the each mobile telecommunication device when the each mobile telecommunication device is in an on-line state.

Each XMPP agent of the respective mobile telecommunication device is further configured to cause the respective mobile telecommunication device to perform the following in a case when the each XMPP agent has received one or more XMPP messages comprising one or more commands: retrieve one or more commands from said one or more received XMPP messages; cause said mobile telecommunication device to generate data by executing the one or more retrieved commands on said respective mobile telecommunication device; and generate one or more XMPP messages comprising the generated data.

The computer microprocessor of the fan-out server is further configured to: persist of the dispatching of the XMPP message to the designated mobile telecommunication device until the state of said designated device is changed from an off-line sate to the on-line state, wherein each mobile telecommunication device has the respective XMPP agent being configured to disable receiving the dispatched XMPP messages designated for the each mobile telecommunication device via the bidirectional sockets of the each mobile telecommunication device when the each mobile telecommunication device is in the off-line state; receive XMPP messages from the XMPP agents of the mobile telecommunication devices designated for the mobile telecommunication device management server using the XMPP protocol via the cellular digital telecommunication network and the bidirectional sockets of the XMPP agents and the fan-out server, wherein said XMPP messages are generated by the respective mobile telecommunication devices; and forward the XMPP messages received from the XMPP agents of the respective mobile telecommunication devices to the XMPP agent of the mobile telecommunication device management server via bidirectional sockets of the fan-out server and the XMPP agent of the mobile telecommunication device management server using the XMPP protocol.

In another embodiment at least a portion of users and at least a portion of REST clients are connected to the mobile telecommunication device management server via internet.

In yet another embodiment each of at least a portion of the XMPP agents of the respective mobile telecommunications device is further configured to cause the respective mobile telecommunication device to perform the following in a case when the each of at least a portion of the XMPP agents has received one or more XMPP messages comprising one or more commands: cause said mobile telecommunication device to generate one or more other commands designated for one or more of the mobile telecommunication devices by executing said one or more commands retrieved from said one or more XMPP messages on said respective mobile telecommunication device; and generate one or more XMPP messages comprising the one or more generated commands.

The processing by the service component layer of one or more XMPP messages comprises the following in a case when said one or more XMPP messages comprise one of the commands designated for one or more of the mobile telecommunication devices: retrieving said command from said one or more XMPP messages; and the processing of the retrieved command by the service layer component.

The processing by the service component layer of one or more XMPP messages comprises the following in a case when said one or more XMPP messages comprise data generated by execution of one or more commands on one or more of the mobile telecommunication devices for which said one or more commands generated by one of the mobile telecommunication devices were designated: retrieving said data from said one or more XMPP messages; and generating one or more XMPP messages in the format of the XMPP protocol designated for the mobile telecommunication device which has generated said one or more commands, wherein the one or more generated XMPP messages comprise at least a portion of the retrieved data.

In yet another embodiment the processing of the command by the service layer component further comprises: retrieving from a database configuration information of one or more of the mobile telecommunication devices for which said command is designated; and in a case when said command complies with the retrieved configuration information performing of the generating of the one or more XMPP messages in the format of the XMPP protocol, wherein as a result thereof each designated mobile device has at least one respective XMPP message designated for it comprising the command converted by using data being specific for operating of the each designated mobile telecommunication device, otherwise in a case when said command is issued by either one of the users or one of the REST clients sending an error message via one of the REST APIs to either said user or said REST client, wherein said REST API was activated upon the receipt of said command, and in a case when said command is generated by one of the mobile telecommunication devices generating an XMPP message comprising an error message designated for the one of the mobile telecommunication devices.

In a case when as a result of execution on one of the mobile telecommunication devices of one of the commands a configuration of said mobile telecommunication device is changed the data generated as a result of execution of said command on said mobile telecommunication device comprises information representing changes in the configuration of said mobile telecommunication device and the processing of one or more XMPP messages comprising said data by the service layer component comprises the following: retrieving the information representing changes in the configuration of said mobile telecommunication device from said one or more received XMPP messages; and updating configuration information of said mobile telecommunication device in the database by using the retrieved information representing changes in the configuration of said mobile telecommunication device.

Yet another embodiment provides for a system comprising: a computer microprocessor configured touse a general purpose messaging transport protocol to manage, control, and monitor mobile telecommunication devices.

In yet another embodiment the general purpose messaging transport protocol comprises Extensible Messaging and Presence Protocol (XMPP).

In yet another embodiment the XMPP is implemented using transport control protocol/internet protocol (TCP/IP) with non-blocking sockets.

In yet another embodiment the mobile telecommunication devices comprise one or more of a smart phone and a point of sale (POS) device.

In yet another embodiment the system comprises a general purpose message broker and a server agent component that is configured to communicate with the general purpose message broker, wherein the general purpose message broker is configured to communicate with client agents of the respective mobile telecommunication devices, wherein the general purpose message broker is configured to fan-out packets of the general purpose messaging transport protocol to the designated mobile telecommunication devices.

In yet another embodiment the mobile telecommunication device is operable to establish a transport control protocol (TCP) connection with the general purpose message broker upon startup of the mobile telecommunication device.

In yet another embodiment the client agent and the general purpose message broker establish a bidirectional socket.

In yet another embodiment the client agent of at least one mobile telecommunication device is configured to control and monitor one or more other telecommunication mobile devices via their respective client agents.

In yet another embodiment the general purpose broker is a fan-out server on a digital cellular telecommunication network, the client agents of the mobile telecommunication devices communicate with the server agent component via the fan-out server using the digital cellular telecommunication network.

In yet another embodiment the computer microprocessor is operable to lock the mobile telecommunication device, unlock the mobile telecommunication device, modify data on the mobile telecommunication device, receive status data relating to the mobile telecommunication device, install an application on the mobile telecommunication device, receive geo-location data from the mobile telecommunication device, and receive an error log from the mobile telecommunication device.

In yet another embodiment the mobile telecommunication devices are configured to communicate with each other in a peer to peer fashion using the general purpose messaging transport protocol.

Yet another embodiment provides for a process comprising:using a general purpose messaging transport protocol to manage, control, and monitor a mobile telecommunication device. In yet another embodiment the general purpose messaging transport protocol comprises Extensible Messaging and Presence Protocol (XMPP), wherein the XMPP is implemented using transport control protocol/internet protocol (TCP/IP) with non-blocking sockets.

In yet another embodiment the mobile telecommunication device comprises a client agent that is operable to communicate with a general purpose message broker; wherein the mobile telecommunication device is operable to establish a transport control protocol (TCP) connection with the general purpose message broker upon startup of the mobile telecommunication device; and wherein the client agent and the general purpose message broker establish a bidirectional socket.

In yet another embodiment the process comprises controlling a plurality of mobile telecommunication devices with the general purpose transport protocol; wherein two or more of the plurality of mobile telecommunication devices are associated with a group of mobile telecommunication devices.

In yet another embodiment the communication between the mobile telecommunication device and the second mobile telecommunication device comprises the mobile telecommunication device managing, controlling, and monitoring the second mobile telecommunications device.

Yet another embodiment provides for a computer readable medium comprising instructions that when executed by a microprocessor execute a process comprising using a general purpose messaging transport protocol to manage, control, and monitor a mobile telecommunication device.

Yet another embodiment provides for a method for operating a server cluster comprising a mobile telecommunication device management server and a fan-out server. The method comprises causing a computer microprocessor of the mobile telecommunication device management server to receive commands issued by users or REST clients designated for mobile telecommunication devices for operating of the mobile telecommunication devices, wherein each mobile telecommunication device is configured to execute one or more commands designated for the each mobile telecommunication device and generate data by execution of said one or more external commands; upon the receipt of the command issued by either one of the users or one of the REST clients activate a respective REST API of the mobile telecommunication device management server, wherein the respective REST API enables forwarding of said received external command to a XMPP agent of the mobile telecommunication device management server after processing of said command by a service layer component of the mobile telecommunication device management server, wherein the mobile telecommunication device management server comprises a plurality of the REST APIs and the commands issued by the users or by the REST clients are grouped in groups and each group has the respective REST API;cause the service layer component to process the command designated for one or more of the mobile telecommunication devices, wherein the processing of the command by the service layer component comprises generating one or more XMPP messages in a format of the XMPP protocol, wherein as a result thereof each designated mobile device has at least one respective XMPP message designated for it comprising the command converted by using data being specific for operating of the each designated mobile telecommunication device;cause the XMPP agent of the mobile telecommunication device management server to send one or more XMPP messages designated for one or more of the mobile telecommunication devices to the fan-out server via bidirectional sockets of said XMPP agent and the fan-out server using the XMPP protocol; cause the XMPP agent of the mobile telecommunication device management server to receive one or more XMPP messages designated for the mobile telecommunication device management server from the fan-out server via the bidirectional sockets of said XMPP agent and the fan-out server using the XMPP protocol; forward one or more XMPP messages received by the XMPP agent of the mobile telecommunication device management server from the XMPP agent of the mobile telecommunication device management server to the service layer component (132); and cause the service layer component to process one or more XMPP messages forwarded from the XMPP agent of the mobile telecommunication device management server to the service layer component.

The processing of said one or more XMPP messages comprises the following in a case when said one or more XMPP messages comprise data generated by execution of one of the commands issued either by one of the users or by the one of the REST clients on one or more of the mobile telecommunication devices for which said command was designated: retrieving said data from said one or more XMPP messages; and forwarding at least a portion of said data via the one of the REST APIs to either said user or to said REST client, wherein said REST API was activated upon the receipt of said command.

The method further comprises causing a computer microprocessor of the fan-out server to perform the following: receive the XMPP messages designated for the mobile telecommunication devices from the XMPP agent of the mobile telecommunication device management server via the bidirectional sockets of the fan-out server and the XMPP agent of the mobile telecommunication device management server using the XMPP protocol; dispatch the XMPP messages to respective XMPP agents (122) of the designated mobile telecommunication devices (120A....120N) using the XMPP protocol via a cellular digital telecommunication network and bidirectional sockets of said XMPP agents and fan-out server, wherein each mobile telecommunication device has the respective XMPP agent being configured to enable receiving the dispatched XMPP messages designated for the each mobile telecommunication device via the bidirectional sockets of the each mobile telecommunication device when the each mobile telecommunication device is in an on-line state.

Each XMPP agent of the respective mobile telecommunication device is further configured to cause the respective mobile telecommunication device to perform the following in a case when the each XMPP agent has received one or more dispatched XMPP messages comprising one or more commands: retrieve one or more commands from said one or more received XMPP messages; cause said mobile telecommunication device to generate data by executing the one or more retrieved commands on said respective mobile telecommunication device; and generate one or more XMPP messages comprising the generated data.

The method further comprises causing the computer microprocessor of the fan-out server to perform the following: persist of the dispatching of the XMPP message to the designated mobile telecommunication device until the state of said designated device is changed from an off-line sate to the on-line state, wherein each mobile telecommunication device has the respective XMPP agent being configured to disable receiving the dispatched XMPP messages designated for the each mobile telecommunication device via the bidirectional sockets of the each mobile telecommunication device when the each mobile telecommunication device is in the off-line state; receive XMPP messages from the XMPP agents of the mobile telecommunication devices designated for the mobile telecommunication device management server using the XMPP protocol via the cellular digital telecommunication network and the bidirectional sockets of the XMPP agents and the fan-out server, wherein said XMPP messages are generated by the respective mobile telecommunication devices; and forward the XMPP messages received from the XMPP agents of the respective mobile telecommunication devices to the XMPP agent of the mobile telecommunication device management server via bidirectional sockets of the fan-out server and the XMPP agent of the mobile telecommunication device management server using the XMPP protocol.

Yet another embodiment provides for a non-transitory computer readable storage medium embodying a computer program for performing the aforementioned method.

### Brief Description of the Drawings

**FIGS. 1A** and **1B**are block diagrams of example embodiments of systems for using a general purpose messaging transport protocol for managing and controlling a plurality of mobile communication devices.
**FIGS. 2A** and **2B**are a flowchart-like diagram illustrating steps and features of a process and a system for managing and controlling a plurality of mobile communication devices.
**FIG. 3** is a block diagram of an example embodiment of a computer system in connection with which one or more embodiments of the present disclosure can execute.

### Detailed Description

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. Furthermore, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

In an embodiment, the above-discussed difficulties in managing mobile devices are addressed by using, instead of the currently-used Server/Client agents, a general purpose messaging transport protocol such as Extensible Messaging and Presence Protocol (XMPP). As is known to those of skill in the art, XMPP is a communications protocol for message-oriented middleware based on XML (Extensible Markup Language). XMPP is a set of open technologies for instant messaging, multi-party chat, voice and video calls, collaboration, lightweight middleware, content syndication, and generalized routing of XML data. Because of its extensible design, it can also be used for publish-subscribe systems; signaling for VoIP (Voice over IP), video, and file transfer; gaming; and social networking services. Because of its open nature, anyone may implement an XMPP service and interoperate with other organizations' implementations of XMPP services. In addition to its open nature, the architecture of an XMPP network is similar to email. That is, anyone can run their own XMPP server, and there is no central master server.

Due in part to its open structure, custom functionalities can be built on top of an XMPP system or server. To maintain interoperability however, common extensions are managed by the XMPP Standards Foundation. As noted, such XMPP functionalities and applications beyond instant messaging include groupchat, network management, content syndication, collaboration tools, file sharing, gaming, remote systems control and monitoring, geo-location, middleware and cloud computing, VoIP, and identity services. XMPP is also used in deployments of non-IM services, including smart grid systems such as demand-response applications, message-oriented middleware, and as a replacement forshort message service (SMS)to provide text messaging on many smartphone clients.

The XMPP Standards Foundation(or XSF) is active in developing open XMPP extensions. However, extensions can also be defined by any individual, software project, or organization. An example of an extension is the federation protocol in Apache Wave (the child of Google Wave), which is based on XMPP.

An XMPP network uses a client-server architecture (*i.e*.*,* clients do not talk directly to one another). However, it is decentralized by design, since there is no central authoritative server, and as noted, anyone may run their own XMPP server on their own domain.

In an embodiment, an XMPP-based presence-enabled communication is created between a plurality of mobile telecommunication devices and the XMPP server over transmission control protocol/internet protocol (TCP/IP). In a specific embodiment, the XMPP server uses Apache MINA(Multipurpose Infrastructure for Network Application) with non-blocking sockets to achieve a large scale and to support a large fleet of devices deployed remotely.

The open source XMPP server implementation can scale up to 100,000 connections pernode.

As is known to those of skill in the art, Apache MINA is an open source Java network application framework. MINA can be used to create scalable, high performance network applications. MINA provides unified application program interfaces (APIs) for various transports like TCP, UDP, and serial communication. It also makes it easy to make an implementation of custom transport type. MINA provides both high-level and low-level network APIs. A user application interacts with MINA APIs, shielding the user application from low level I/O details. This makes it easy for the users to concentrate on the application logic and leave the I/O handling to Apache MINA.

In using an XMPP server to monitor and control mobile telecommunication devices, each mobile telecommunication device has an XMPP client agent installed on it that, on startup of the mobile telecommunication device, establishes a durable TCP connection with the XMPP server. The same TCP connection can be used for bidirectional socket communication. In effect, this means that the server and client agents can push information as well as receive information on the same socket.

The mobile telecommunication devices receive commands over the established XMPP channel. The received commands from the XMPP server can include commands to lock/unlock the device, to write data to the device, to erase data from the device, to acquire health statistics of the device, and to install applications on the device. Additionally, the mobile telecommunication device can send to the XMPP server geo-location data and snippets of error logs over the same channel that the XMPP server uses to transmit to the mobile telecommunication device.

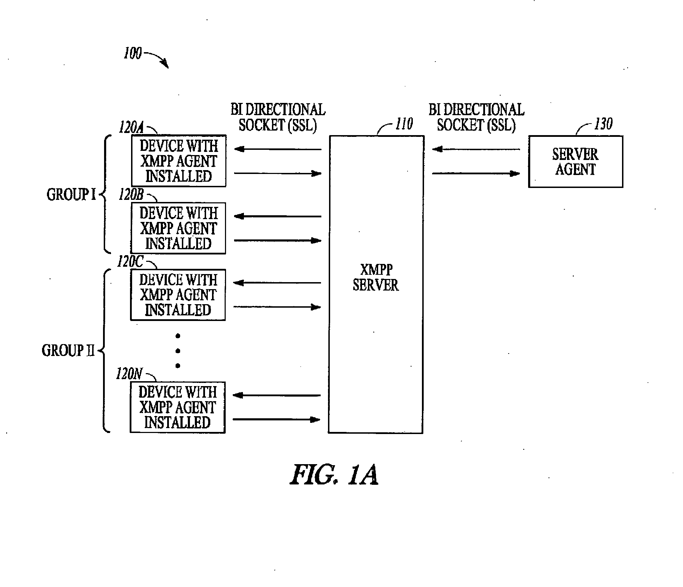

**FIG. 1A**is a block diagram illustrating an example embodiment of a system100 that uses an XMPP server**110** to control and monitor a plurality of mobile telecommunication devices**120A, 120B, 120C,** and **120N**.As illustrated in **FIG. 1A****,** the XMPP server **110** and the mobile telecommunication devices **120A, 120B, 120C,** and **120N** communicate via a bidirectional socket. The system **100** further includes a server agent **130,** which connects to the XMPP server **110** via XMPP protocol. The server agent **130** is also abstracted to communicate using protocols other than XMPP. The server agent **130** is wholly responsible for sending the commands noted in the previous paragraph (*e.g.*, commands to lock/unlock a device).

As further illustrated in **FIG. 1A****,** the mobile telecommunication devices can be aggregated into groups. For example, mobile telecommunication devices **120A** and **120B** could be part of a Group I, and mobile telecommunication devices **120C** and **120N** (and the mobile telecommunication devices in between) could be part of a Group II. These groupings can be based on virtually any criteria, such as per company department, per employee position and pay scale, per years of service with the company, per type of application used by the employee, *etc.* In short, the groupings can be implemented so as to permit group-based communications, similar to email groups in an email system, and to allow updates to a group of devices.

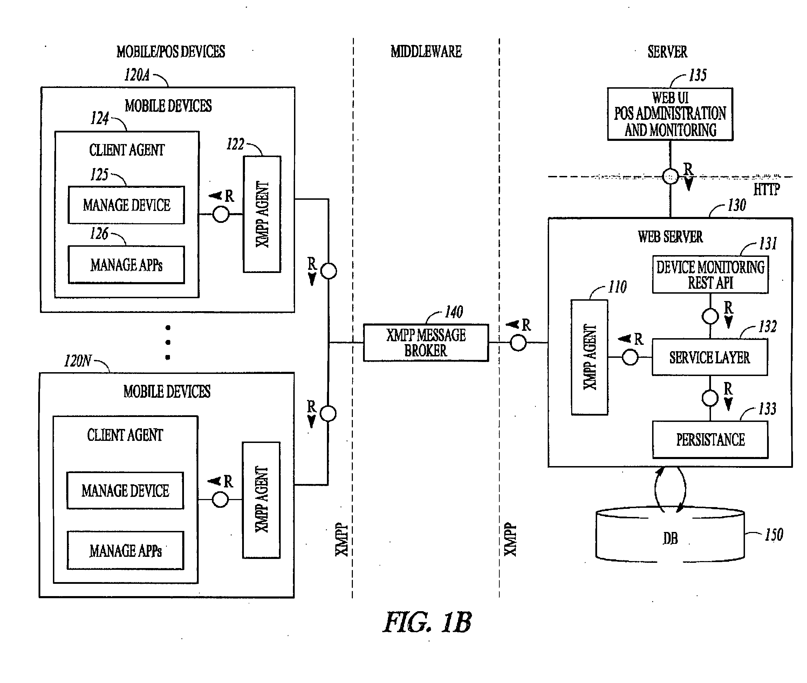

**FIG. 1B** is a block diagram illustrating another example embodiment of a system that uses XMPP protocol to control and monitor a plurality of mobile telecommunication devices. **FIG. 1B**illustrates the mobile device **120A** in a little more detail. Specifically, the mobile device **120A** includes a XMPP agent **122,** and a client agent **124.** The client agent **124** further includes a manage device module **125** and a manage apps module **126**. An XMPP message broker **140** serves as middleware between the mobile devices and the servers. The server agent **130** includes the XMPP agent **110.** The server agent **130** further includes a device monitoring REST API **131,** a service layer **132,** and a persistence module **133.** The server agent **130** communicates with database **150,** and is accessible via user interface **135.** The service layer is configured to covert commands for operating mobile telecommunication devices 120A...120N received by the server agent via user interface into XMPP messages. The persistence module is used by the service layer for saving or accessing any data related to devices being managed or server information stored in the database. This persistence module further provides a universal interface between the service layer and the database. It enables changing a type of database without affecting the service layer. For instance it enables changing the databasetype from My Structured Query Language (MySQL) type to High-Performance Analytic Appliance (HANA)type without a need to modify the service layer.

In another embodiment server cluster comprising a mobile telecommunication device management server (130) and a fan-out server (140) is used to manage, control, and monitor the mobile telecommunication devices (120A;.....120N).

The mobile device management server comprises a computer microprocessor configured to perform the following functions:
a)receive commands issued by users (135) or REST clients designated for mobile telecommunication devices for operating of the mobile telecommunication devices, wherein each mobile telecommunication device is configured to execute one or more commands designated for the each mobile telecommunication device and generate data by execution of said one or more external commands;
b) upon the receipt of the command issued by either one of the users or one of the REST clients activate a respective REST API (131) of the mobile telecommunication device management server, wherein the respective REST API enables forwarding of said received external command to a XMPP agent (110) of the mobile telecommunication device management server after processing of said command by a service layer component (132) of the mobile telecommunication device management server, wherein the mobile telecommunication device management server comprises a plurality of the REST APIs and the commands issued by the users or by the REST clients are grouped in groups and each group has the respective REST API;
c) cause the service layer component to process the command designated for one or more of the mobile telecommunication devices, wherein the processing of the command by the service layer component comprises generating one or more XMPP messages in a format of the XMPP protocol, wherein as a result thereof each designated mobile device has at least one respective XMPP message designated for it comprising the command converted by using data being specific for operating of the each designated mobile telecommunication device;
d) cause the XMPP agent of the mobile telecommunication device management server to send one or more XMPP messages designated for one or more of the mobile telecommunication devices to the fan-out server via bidirectional sockets of said XMPP agent and the fan-out server using the XMPP protocol;
e) cause the XMPP agent of the mobile telecommunication device management server to receive one or more XMPP messages designated for the mobile telecommunication device management server from the fan-out server via the bidirectional sockets of said XMPP agent and the fan-out server using the XMPP protocol;
f) forward one or more XMPP messages received by the XMPP agent of the mobile telecommunication device management server from the XMPP agent of the mobile telecommunication device management server to the service layer component (132);
g) cause the service layer component to process one or more XMPP messages forwarded from the XMPP agent of the mobile telecommunication device management server to the service layer component, wherein the processing of said one or more XMPP messages comprises the following in a case when said one or more XMPP messages comprise data generated by execution of one of the commands issued either by one of the users or by the one of the REST clients on one or more of the mobile telecommunication devices for which said command was designated:
   o retrieving said data from said one or more XMPP messages; and
   o forwarding at least a portion of said data via the one of the REST APIs to either said user or to said REST client, wherein said REST API was activated upon the receipt of said command;
   wherein the fan-out server comprises a computer microprocessor configured to perform the following functions:
h) receive the XMPP messages designated for the mobile telecommunication devices from the XMPP agent (110) of the mobile telecommunication device management server via the bidirectional sockets of the fan-out server and the XMPP agent of the mobile telecommunication device management server using the XMPP protocol;
i) dispatch the XMPP messages to respective XMPP agents (122) of the designated mobile telecommunication devices (120A....120N) using the XMPP protocol via a cellular digital telecommunication network and bidirectional sockets of said XMPP agents and fan-out server, wherein each mobile telecommunication device has the respective XMPP agent being configured to enable receiving the dispatched XMPP messages designated for the each mobile telecommunication device via the bidirectional sockets of the each mobile telecommunication device when the each mobile telecommunication device is in an on-line state, wherein each XMPP agent of the respective mobile telecommunication device is further configured to cause the respective mobile telecommunication device to perform the following in a case when the each XMPP agent has received one or more dispatched XMPP messages comprising one or more commands:
   ∘ retrieve one or more commands from said one or more received XMPP messages;
   ∘ cause said mobile telecommunication device to generate data by executing the one or more retrievedcommands on said respective mobile telecommunication device; and
   ∘ generate one or more XMPP messages comprising the generated data;
j) persist of the dispatching of the XMPP message to the designated mobile telecommunication device until the state of said designated device is changed from an off-line sate to the on-line state, wherein each mobile telecommunication device has the respective XMPP agent being configured to disable receiving the dispatched XMPP messages designated for the each mobile telecommunication device via the bidirectional sockets of the each mobile telecommunication device when the each mobile telecommunication device is in the off-line state;
k) receive XMPP messages from the XMPP agents of the mobile telecommunication devices designated for the mobile telecommunication device management server using the XMPP protocol via the cellular digital telecommunication network and the bidirectional sockets of the XMPP agents and the fan-out server, wherein said XMPP messages are generated by the respective mobile telecommunication devices;
l) forward the XMPP messages received from the XMPP agents of the respective mobile telecommunication devices to the XMPP agent of the mobile telecommunication device management server via bidirectional sockets of the fan-out server and the XMPP agent of the mobile telecommunication device management server using the XMPP protocol.

The examples of data being specific for operating of the designated mobile telecommunication device used in function c) may be commands parsable by the designated mobile telecommunication device and a jabber identification (ID) of said designated mobile telecommunication device, wherein the jabber ID is used for identificationof said designated in networks using XMPP protocol. For instance one of the users issues a command to request a battery level of one of the mobile telecommunication devices. A body of the command may be formulated using a structured query language (SQL) comprising a name of the designated mobile telecommunication device and a dedicated field requesting the value of battery level. In this case the name of the designated mobile telecommunication device is substituted by the jabber ID of said designated mobile telecommunication device and the dedicated field is substituted by a command requesting the battery level of said designated mobile telecommunication device being parsable by said designated mobile telecommunication device. Referring again to the aforementioned example illustrating function c) execution of the function g) may result in generating a message addressed to the user issued the aforementioned command, wherein the message comprises an SQL document. Said SQL document is generated using received XMPP message comprising the jabber ID of the designated mobile telecommunication device and a value of the battery level of said designated mobile telecommunication device. The generated SQL document comprises a line comprising the name of said designated mobile telecommunication device identified on a basis of the jabber ID and a line comprisingthe value if the battery level retrieved from the XMPP message.

Execution of the function j) may be implemented as follows. In a case when the fan-out server has an XMPP message to be dispatched to one of the mobile telecommunication devices in the off-line state the fan-out server starts monitoring the state of said mobile telecommunication device. After the fan-out sever registers a change in the state of the mobile telecommunication device from off-line state to the on-line state, the fan-out server dispatches said XMPP message to said mobile telecommunication device.

Yet another embodiment provides for a method to manage, control, and monitor the mobile telecommunication devices (120A;.....120N) using a server cluster comprising a mobile telecommunication device management server (130) and a fan-out server (140).

The mobile telecommunication devices have the same functionalities as specified in the embodiment described above. The mobile device management server comprises a computer microprocessor configured to perform the aforementioned functions: a)- g). The fan-out server comprises a computer microprocessor configured to perform the aforementioned functions: h)-l). The method comprises execution of functions a)-l).

The method, wherein a command designated to one of the mobile telecommunication device being in the on-line state is performed by executing the aforementioned functions in the following order: a), b), c), d), h), i), k), l), e), f), g).

The method, wherein a command designated to one of the mobile telecommunication device being in the off-line state is performed by executing the aforementioned functions in the following order: a), b), c), d), h),j), k), l) e), f), g).

Yet another embodiment provides for non-transitory computer readable storage medium embodying a computer program for performing the method of the previous embodiment.

In the latter three embodiments at least a portion of users and at least a portion of REST clients may be connected to the mobile telecommunication device management server via internet.

The latter four embodiments may be extended with additional functionality of themobile telecommunication device enabling management, control, and monitoring of one or more mobile telecommunication device via said mobile telecommunication device.

Each of at least a portion of the XMPP agents of the respective mobile telecommunications device is further configured to cause the respective mobile telecommunication device to perform the following in a case when the each of at least a portion of the XMPP agents has received one or more XMPP messages comprising one or more commands:
∘ cause said mobile telecommunication device to generate one or more other commands designated for one or more of the mobile telecommunication devices by executing said one or more commands retrieved from said one or more XMPP messages on said respective mobile telecommunication device; and
∘ generate one or more XMPP messages comprising the one or more generated commands;
wherein the processingby the service component layer of one or more XMPP messages comprises the following in a case when said one or more XMPP messages comprise one of the commands designated for one or more of the mobile telecommunication devices:
∘ retrieving said command from said one or more XMPP messages; and
∘ the processing of the retrieved command by the service layer component;
wherein the processing by the service component layerof one or more XMPP messages comprises the following in a case when said one or more XMPP messages comprise data generated by execution of one or more commands on one or more of the mobile telecommunication devices for which said one or more commands generated by one of the mobile telecommunication devices were designated:
∘ retrieving said data from said one or more XMPP messages; and
∘ generating one or more XMPP messages in the format of the XMPP protocol designated for the mobile telecommunication device which has generated said one or more commands, wherein the one or more generated XMPP messages comprise at least a portion of the retrieved data.

The latter five embodiments may be extended with additional functionality safe execution of the commands and monitoring configurations of the mobile telecommunication devices. The processing of the command by the service layer component (132) further comprises: retrieving from a database (150) configuration information of one or more of the mobile telecommunication devices for which said command is designated;
in a case when said command complies with the retrieved configuration information performing of the generating of the one or more XMPP messages in the format of the XMPP protocol, wherein as a result thereof each designated mobile device has at least one respective XMPP message designated for it comprising the command converted by using data being specific for operating of the each designated mobile telecommunication device, otherwise in a case when said command is issued by either one of the users or one of the REST clients sending an error message via one of the REST APIs to either said user or said REST client, wherein said REST API was activated upon the receipt of said command, and in a case when said command in generated by one of the mobile telecommunication devices generating an XMPP message comprising an error message designated for the one of the mobile telecommunication devices;
wherein in a case when as a result of execution on one of the mobile telecommunication devices of one of the commands a configuration of said mobile telecommunication device is changed the data generated as a result of execution of said command on said mobile telecommunication device comprises information representing changes in the configuration of said mobile telecommunication device and the processing of one or more XMPP messages comprising said data by the service layer component comprises the following:
∘ retrieving the information representing changes in the configuration of said mobile telecommunication device from said one or more received XMPP messages; and
∘ updating configuration information of said mobile telecommunication device in the database by using the retrieved information representing changes in the configuration of said mobile telecommunication device.

In another embodiment, XMPP communications occur in a peer to peer fashion between devices. In such a peer to peer system, all devices can be given equal functionality, or one or more devices could be given additional supervisory authority, so as to monitor and control the other devices.

The system **100** can be deployed in connection with Androids, Apple's Iphone, or other smart phone platforms. The system can also be deployed in connection with mobile point of sale (POS) devices.

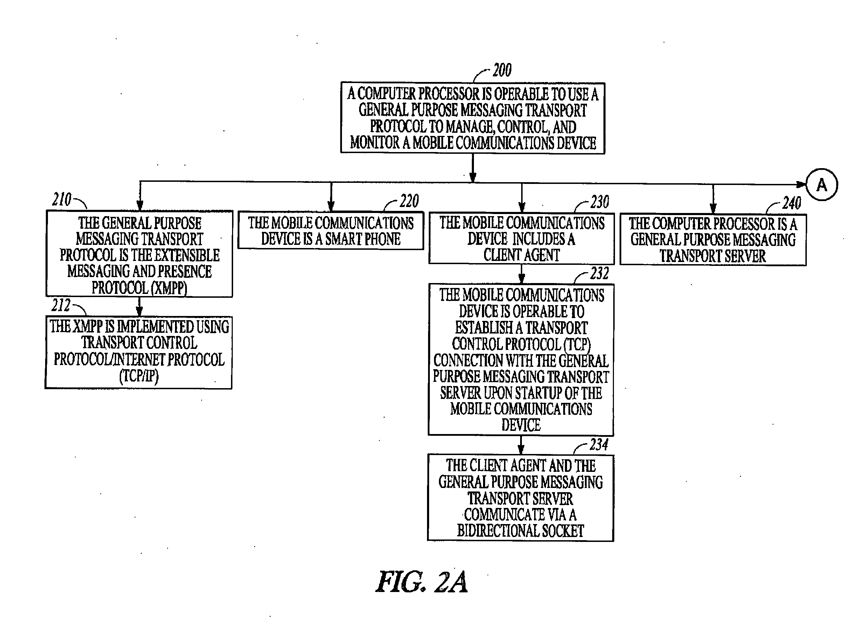

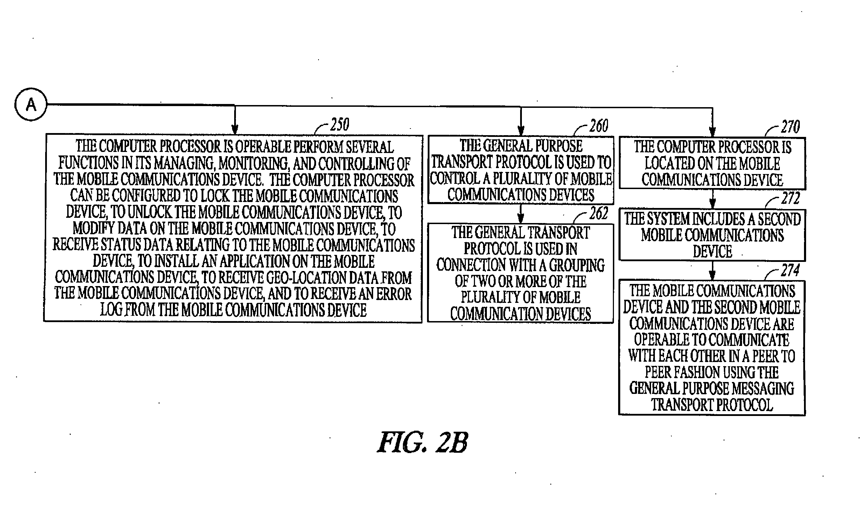

**FIG. 2** is a block diagram illustrating steps and features of an example process and system for managing mobile telecommunication devices using a general purpose messaging transport protocol. **FIG. 2** includes a number of process blocks **200-274.** Though arranged serially in the examples of **FIG. 2****,** other examples may reorder the blocks, omit one or more blocks, and/or execute two or more blocks in parallel using multiple microprocessors or a single microprocessor organized as two or more virtual machines or sub-microprocessors. Moreover, still other examples can implement the blocks as one or more specific interconnected hardware or integrated circuit modules with related control and data signals communicated between and through the modules. Thus, any process flow is applicable to software, firmware, hardware, and hybrid implementations.

Referring to **FIG. 2,** at **200,** a computer microprocessor is operable to use a general purpose messaging transport protocol to manage, control, and monitor a mobile telecommunication device.

As noted at **210,** the general purpose messaging transport protocol can be the Extensible Messaging and Presence Protocol (XMPP). As noted above, the XMPP is an open source architecture that permits scalability to many mobile telecommunication devices. In an embodiment, as indicated at **212,** the XMPP is implemented using transport control protocol/internet protocol (TCP/IP) with non-blocking sockets.

As indicated at **220,** the mobile telecommunication device can be a smart phone. The smart phone can be an Android smart phone, an iPhone by the Apple Corporation, or any other smart phone platform. The device could also be a mobile point of sale (POS) device. Block **230** indicates that the mobile telecommunication device can include a client agent. The client agent is configured to communicate with a general purpose message broker. As noted in block **210,** the general transport messaging transport server/protocol can be an XMPP server/protocol. Additionally, block **232** shows that the mobile telecommunication device is operable to establish a transport control protocol (TCP) connection with the general purpose message broker upon startup of the mobile telecommunication device. Further, block **234** shows that the client agent and the general purpose message broker communicate via a bidirectional socket. The bidirectional socket permits the client agent on the mobile telecommunication device and the general purpose message broker to entertain requests and responses to those requests. For example, the server agent via the message broker could request a health status of the mobile telecommunication device, and the mobile telecommunication device can respond with the status of the device.

Block **240** shows that the computer microprocessor can include the general purpose message broker and additionally include a server agent component that is operable to communicate with the general purpose message broker.

Block **250** indicates that the computer microprocessor is operable to perform several functions in its managing, monitoring, and controlling of the mobile telecommunication device. For example, the computer microprocessor can be configured to lock the mobile telecommunication device, to unlock the mobile telecommunication device, to modify data on the mobile telecommunication device, to receive status data relating to the mobile telecommunication device, to install an application on the mobile telecommunication device, to receive geo-location data from the mobile telecommunication device, and to receive an error log from the mobile telecommunication device.

Block **260** shows that the general purpose transport protocol can be used to control a plurality of mobile telecommunication devices. Additionally, at **262,** the general transport protocol can be used in connection with a grouping of two or more of the plurality of mobile telecommunication devices. As noted above, the grouping of the mobile telecommunication devices can be according to any criteria (*e.g.*, departments within a company), and used for any purpose (*e.g.*, monitoring the costs associated with the plurality of mobile telecommunication devices on a per company department basis).

Block **270** indicates that the computer microprocessor can be located on the mobile telecommunication device. Additionally, at **272,** the system includes a second mobile telecommunication device. At **274,** the mobile telecommunication device and the second mobile telecommunication device are operable to communicate with each other in a peer to peer fashion using the general purpose messaging transport protocol. As noted above, one or more mobile telecommunication devices can be configured to monitor and control the plurality of other mobile telecommunication devices.

The following are sample code snippets to illustrate an example of using an XMPP protocol in requests/responses for locking a mobile telecommunication device and requests/responses for determining memory usage in a mobile telecommunication device.

```
 //Server Request
 {"requestType": "action"
 "ID": "dff0a0dface647a3b6c9acba7a418abe"
 "command": "LOCK_DEVICE"
 "data":""}
 //Client Response
 {"ID":"dff0a0dface647a3b6c9acba7a418abe"
 "response": "success"}
 //Request And Response for MemoryUsage
 //Server Request
 {"requestType": "status"
 "ID": "dga0a0dface647a3b619acba7a418nbe"
 "command":"MEMEORY USAGE"
 "data"; ""}
 //Client Response
 {"ID" :"dff00a0dface647a3b6c9acba7a418abe"
 "response": "RAM=82%| SDCARD=45%"}
 //server snippet
    //-----------------
      //listener class to receive Server messages
      publicMessageListenermessagelistener;
      XMPPConnection connection;
       /**
        * Connects Server Agent to XMPP message broker
        */
        publicvoid connect() throws Exception
        {
           ConnectionConfiguration config = newConnectionConfigura-
 tion("50.112.250.11 ",5222);
           connection = newXMPPConnection(config);
           connection.connect();
           connection.login{"adminuser", "adminpass");
           connection.getChatManager().addChatListener(messagelistener);
        }
        /**
        * Method to process Client Message
        * @param clientAgent is handler for the agent(Client) that send the message
        * @param message
        */
        publicvoidprocessMessage(Chat clientAgent, Message message) {
            String messageText = message.getBody();
           Gson gson = newGson();
           ClientResponse clientResponse = gSon.fromJson(responseLine, ClientRe-
 sponse.class);
           //process Client response and store/report the response.
           processClientResponse{clientResponse);
        }
     //Client Snippet
   //------------------
     //listener class to receive Server messages
     public MessageListener messagelistener= newMessageListener();
     /**
       * Connects Client Agent to XMPP message broker
       */
       publicvoid Connect()
       {
           ConnectionConfiguration config = newConnectionConfigura-
           tion("50.112.250.11", 5222);
           config.setTruststoreType("BKS");
           SmackConfigura-
           tion.setKeepAliveInterval(10000);SmackConfiguration.setPackekReplyTimeout(30000);
           connection = newXMPPConnection(config);
           try {
              connection.connect();
              connection.login(user,password);
           } catch (XMPPException e) {
           e.printStackTrace();
           }
          Presence presence = newPresence(Presence.Type.available);
           connection.sendPacket(presence);
           //attache message listener to commands from server
           connection.getChatManager().createChat("adminuser@domain", mlistener);
       }
       /**
       * Method to Process Server Request
       * @param serverAgent is handler for the agent(server) that send the message
       * @param message
       */
       publicvoid processMessage(Chat serverAgent, Message message) {
           String messageText = message.getBody();
           Gson gson = newGson();
           ServerRequest serverRequest = gSon.fromJson(responseLine, ServerRe-
           quest.class);
           if(serverRequest.getRequestType("action"))
           {
              handleActionRequest(serverAgent,serverRequest);
           }
           elseif{serverRequest.getRequestType("status"))
           {
              handle StatusRequest(serverAgent,serverRequest);
           }
           elseif(serverRequest.getRequestType("sync"))
           {
              handleSyncRequest{serverAgent,serverRequest);
           }
       }
```

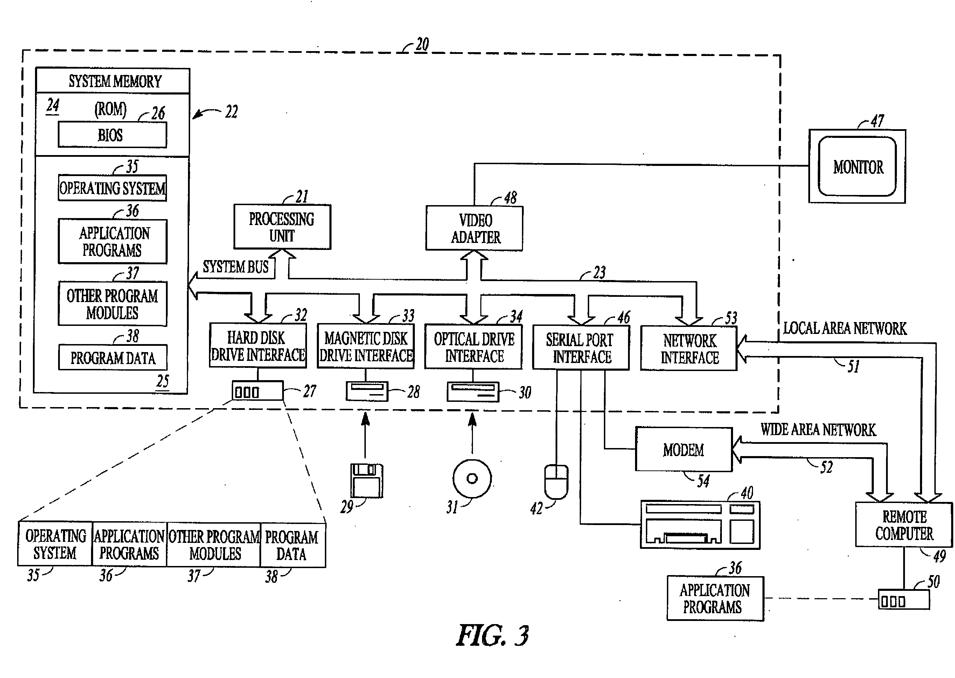

**FIG. 3** is an overview diagram of hardware and an operating environment in conjunction with which embodiments of the invention may be practiced. The description of **FIG. 3** is intended to provide a brief, general description of suitable computer hardware and a suitable computing environment in conjunction with which the invention may be implemented. In some embodiments, the invention is described in the general context of computer-executable instructions, such as program modules, being executed by a computer, such as a personal computer. Generally, program modules include routines, programs, objects, components, data structures, etc., that perform particular tasks or implement particular abstract data types. Moreover, those skilled in the art will appreciate that the invention may be practiced with other computer system configurations, including hand-held devices, multiprocessor systems, microprocessor-based or programmable consumer electronics, network PCs, minicomputers, mainframe computers, and the like. The invention may also be practiced in distributed computer environments where tasks are performed by I/O remote processing devices that are linked through a communications network. In a distributed computing environment, program modules may be located in both local and remote memory storage devices. In the embodiment shown in **FIG. 3****,** a hardware and operating environment is provided that is applicable to any of the servers and/or remote clients shown in the other Figures.

As shown in **FIG. 3****,** one embodiment of the hardware and operating environment includes a general purpose computing device in the form of a computer **20** (*e.g*., a personal computer, workstation, or server), including one or more processing units **21,** a system memory **22,** and a system bus **23** that operatively couples various system components including the system memory **22** to the processing unit **21.** There may be only one or there may be more than one processing unit **21,** such that the processor of computer **20** comprises a single central-processing unit (CPU), or a plurality of processing units, commonly referred to as a multiprocessor or parallel-processor environment. A multiprocessor system can include cloud computing environments. In various embodiments, computer **20** is a conventional computer, a distributed computer, or any other type of computer.

The system bus **23** can be any of several types of bus structures including a memory bus or memory controller, a peripheral bus, and a local bus using any of a variety of bus architectures. The system memory can also be referred to as simply the memory, and, in some embodiments, includes read-only memory (ROM) **24** and random-access memory (RAM) **25.** A basic input/output system (BIOS) program **26,** containing the basic routines that help to transfer information between elements within the computer **20,** such as during start-up, may be stored in ROM **24.** The computer **20** further includes a hard disk drive **27** for reading from and writing to a hard disk, not shown, a magnetic disk drive **28** for reading from or writing to a removable magnetic disk **29,** and an optical disk drive **30** for reading from or writing to a removable optical disk **31** such as a CD ROM or other optical media.

The hard disk drive **27,** magnetic disk drive **28,** and optical disk drive **30** couple with a hard disk drive interface **32,** a magnetic disk drive interface **33,** and an optical disk drive interface **34,** respectively. The drives and their associated computer-readable media provide non volatile storage of computer-readable instructions, data structures, program modules and other data for the computer **20.** It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (*e.g.*, RAID storage devices) and the like, can be used in the exemplary operating environment.

A plurality of program modules can be stored on the hard disk, magnetic disk 29, optical disk **31,** ROM **24,** or RAM **25,** including an operating system **35,** one or more application programs **36,** other program modules **37,** and program data **38.** A plug in containing a security transmission engine for the present invention can be resident on any one or number of these computer-readable media.

A user may enter commands and information into computer **20** through input devices such as a keyboard **40** and pointing device **42.** Other input devices (not shown) can include a microphone, joystick, game pad, satellite dish, scanner, or the like. These other input devices are often connected to the processing unit **21** through a serial port interface **46** that is coupled to the system bus **23,** but can be connected by other interfaces, such as a parallel port, game port, or a universal serial bus (USB). A monitor **47** or other type of display device can also be connected to the system bus **23** via an interface, such as a video adapter **48**. The monitor **47** can display a graphical user interface for the user. In addition to the monitor **47,** computers typically include other peripheral output devices (not shown), such as speakers and printers.

The computer **20** may operate in a networked environment using logical connections to one or more remote computers or servers, such as remote computer **49.** These logical connections are achieved by a communication device coupled to or a part of the computer **20;** the invention is not limited to a particular type of communications device. The remote computer **49** can be another computer, a server, a router, a network PC, a client, a peer device or other common network node, and typically includes many or all of the elements described above I/0 relative to the computer **20,** although only a memory storage device **50** has been illustrated. The logical connections depicted in **FIG. 3** include a local area network (LAN) **51** and/or a wide area network (WAN) **52.** Such networking environments are commonplace in office networks, enterprise-wide computer networks, intranets and the internet, which are all types of networks.

When used in a LAN-networking environment, the computer **20** is connected to the LAN **51** through a network interface or adapter **53,** which is one type of communications device. In some embodiments, when used in a WAN-networking environment, the computer **20** typically includes a modem **54** (another type of communications device) or any other type of communications device, *e.g.,* a wireless transceiver, for establishing communications over the wide-area network **52,** such as the internet. The modem **54,** which may be internal or external, is connected to the system bus 23 via the serial port interface **46.** In a networked environment, program modules depicted relative to the computer **20** can be stored in the remote memory storage device **50** of remote computer, or server **49.** It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

The Abstract is provided and will allow the reader to quickly ascertain the nature and gist of the technical disclosure. It is submitted with the understanding that it will not be used to interpret or limit the scope or meaning of the claims. In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus the following claims are hereby incorporated into the Description of the Embodiments, with each claim standing on its own as a separate example embodiment.

## Claims

1. A server cluster comprising a mobile telecommunication device management server (130) and a fan-out server (140), wherein the mobile device management server comprises a computer microprocessor configured to:
receive commands issued by users (135) or representational state transfer, REST, clients designated for mobile telecommunication devices for operating the mobile telecommunication devices, wherein each mobile telecommunication device is configured to execute one or more commands designated for the each mobile telecommunication device and generate data by execution of said one or more commands;
upon the receipt of the command issued by either one of the users or one of the REST clients activate a respective REST application program interfaces, API, (131) of the mobile telecommunication device management server, wherein the respective REST API enables forwarding of said received command to a extensible messaging and presence protocol, XMPP, agent (110) of the mobile telecommunication device management server after processing of said command by a service layer component (132) of the mobile telecommunication device management server, wherein the mobile telecommunication device management server comprises a plurality of the REST APIs and the commands issued by the users or by the REST clients are grouped in groups and each group has the respective REST API;
cause the service layer component to process the command designated for one or more of the mobile telecommunication devices, wherein the processing of the command by the service layer component comprises generating one or more XMPP messages in a format of the XMPP protocol, wherein as a result thereof each designated mobile device has at least one respective XMPP message designated for it comprising the command converted by using data being specific for operating of the each designated mobile telecommunication device;
cause the XMPP agent of the mobile telecommunication device management server to send one or more XMPP messages designated for one or more of the mobile telecommunication devices to the fan-out server via bidirectional sockets of said XMPP agent and the fan-out server using the XMPP protocol;
cause the XMPP agent of the mobile telecommunication device management server to receive one or more XMPP messages designated for the mobile telecommunication device management server from the fan-out server via the bidirectional sockets of said XMPP agent and the fan-out server using the XMPP protocol;
forward one or more XMPP messages received by the XMPP agent of the mobile telecommunication device management server from the XMPP agent of the mobile telecommunication device management server to the service layer component (132);
cause the service layer component to process one or more XMPP messages forwarded from the XMPP agent of the mobile telecommunication device management server to the service layer component, wherein the processing of said one or more XMPP messages comprises the following in a case when said one or more XMPP messages comprise data generated by execution of one of the commands issued either by one of the users or by the one of the REST clients on one or more of the mobile telecommunication devices for which said command was designated:
retrieving said data from said one or more XMPP messages; and
forwarding at least a portion of said data via the one of the REST APIs to either said user or to said REST client, wherein said REST API was activated upon the receipt of said command;
wherein the fan-out server comprises a computer microprocessor configured to:
receive the XMPP messages designated for the mobile telecommunication devices from the XMPP agent (110) of the mobile telecommunication device management server via the bidirectional sockets of the fan-out server and the XMPP agent of the mobile telecommunication device management server using the XMPP protocol;
dispatch the XMPP messages to respective XMPP agents (122) of the designated mobile telecommunication devices (120A....120N) using the XMPP protocol via a cellular digital telecommunication network and bidirectional sockets of said XMPP agents and fan-out server, wherein each mobile telecommunication device has the respective XMPP agent being configured to enable receiving the dispatched XMPP messages designated for the each mobile telecommunication device via the bidirectional sockets of the each mobile telecommunication device when the each mobile telecommunication device is in an on-line state, wherein each XMPP agent of the respective mobile telecommunication device is further configured to cause the respective mobile telecommunication device to perform the following in a case when the each XMPP agent has received one or more dispatched XMPP messages comprising one or more commands:
∘ retrieve one or more commands from said one or more received XMPP messages;
∘ cause said mobile telecommunication device to generate data by executing the one or more retrieved commands on said respective mobile telecommunication device; and
∘ generate one or more XMPP messages comprising the generated data;
persist of the dispatching of the XMPP message to the designated mobile telecommunication device until the state of said designated device is changed from an off-line sate to the on-line state, wherein each mobile telecommunication device has the respective XMPP agent being configured to disable receiving the dispatched XMPP messages designated for the each mobile telecommunication device via the bidirectional sockets of the each mobile telecommunication device when the each mobile telecommunication device is in the off-line state;
receive XMPP messages from the XMPP agents of the mobile telecommunication devices designated for the mobile telecommunication device management server using the XMPP protocol via the cellular digital telecommunication network and the bidirectional sockets of the XMPP agents and the fan-out server, wherein said XMPP messages are generated by the respective mobile telecommunication devices;
forward the XMPP messages received from the XMPP agents of the respective mobile telecommunication devices to the XMPP agent of the mobile telecommunication device management server via bidirectional sockets of the fan-out server and the XMPP agent of the mobile telecommunication device management server using the XMPP protocol.

2. The server cluster of claim 1, wherein at least a portion of users and at least a portion of REST clients are connected to the mobile telecommunication device management server via Internet.

3. The server cluster of any one of preceding claims, wherein each of at least a portion of the XMPP agents of the respective mobile telecommunications device is further configured to cause the respective mobile telecommunication device to perform the following in a case when the each of at least a portion of the XMPP agents has received one or more XMPP messages comprising one or more commands:
∘ cause said mobile telecommunication device to generate one or more other commands designated for one or more of the mobile telecommunication devices by executing said one or more commands retrieved from said one or more XMPP messages on said respective mobile telecommunication device; and
o generate one or more XMPP messages comprising the one or more generated commands;
wherein the processing by the service component layer of one or more XMPP messages comprises the following in a case when said one or more XMPP messages comprise one of the commands designated for one or more of the mobile telecommunication devices:
o retrieving said command from said one or more XMPP messages; and
o the processing of the retrieved command by the service layer component;
wherein the processing by the service component layer of one or more XMPP messages comprises the following in a case when said one or more XMPP messages comprise data generated by execution of one or more commands on one or more of the mobile telecommunication devices for which said one or more commands generated by one of the mobile telecommunication devices were designated:
∘ retrieving said data from said one or more XMPP messages; and
∘ generating one or more XMPP messages in the format of the XMPP protocol designated for the mobile telecommunication device which has generated said one or more commands, wherein the one or more generated XMPP messages comprise at least a portion of the retrieved data.

4. The server cluster of any one of preceding claims, wherein the processing of the command by the service layer component (132) further comprises:
retrieving from a database (150) configuration information of one or more of the mobile telecommunication devices for which said command is designated;
in a case when said command complies with the retrieved configuration information performing of the generating of the one or more XMPP messages in the format of the XMPP protocol, wherein as a result thereof each designated mobile device has at least one respective XMPP message designated for it comprising the command converted by using data being specific for operating of the each designated mobile telecommunication device, otherwise in a case when said command is issued by either one of the users or one of the REST clients sending an error message via one of the REST APIs to either said user or said REST client, wherein said REST API was activated upon the receipt of said command, and in a case when said command is generated by one of the mobile telecommunication devices generating an XMPP message comprising an error message designated for the one of the mobile telecommunication devices;
wherein in a case when as a result of execution on one of the mobile telecommunication devices of one of the commands a configuration of said mobile telecommunication device is changed the data generated as a result of execution of said command on said mobile telecommunication device comprises information representing changes in the configuration of said mobile telecommunication device and the processing of one or more XMPP messages comprising said data by the service layer component comprises the following:
∘ retrieving the information representing changes in the configuration of said mobile telecommunication device from said one or more received XMPP messages; and
∘ updating configuration information of said mobile telecommunication device in the database by using the retrieved information representing changes in the configuration of said mobile telecommunication device.

5. A method for operating a server cluster comprising a mobile telecommunication device management server (130) and a fan-out server (140), the method comprising:
causing a computer processor of the mobile telecommunication device management server to perform the following:
receive commands issued by users (135) or representational state transfer, REST, clients designated for mobile telecommunication devices for operating the mobile telecommunication devices, wherein each mobile telecommunication device is configured to execute one or more commands designated for the each mobile telecommunication device and generate data by execution of said one or more commands;
upon the receipt of the command issued by either one of the users or one of the REST clients activate a respective REST application program interfaces, API, (131) of the mobile telecommunication device management server, wherein the respective REST API enables forwarding of said received command to a extensible messaging and presence protocol, XMPP, agent (110) of the mobile telecommunication device management server after processing of said command by a service layer component (132) of the mobile telecommunication device management server, wherein the mobile telecommunication device management server comprises a plurality of the REST APIs and the commands issued by the users or by the REST clients are grouped in groups and each group has the respective REST API;
cause the service layer component to process the command designated for one or more of the mobile telecommunication devices, wherein the processing of the command by the service layer component comprises generating one or more XMPP messages in a format of the XMPP protocol, wherein as a result thereof each designated mobile device has at least one respective XMPP message designated for it comprising the command converted by using data being specific for operating of the each designated mobile telecommunication device;
cause the XMPP agent of the mobile telecommunication device management server to send one or more XMPP messages designated for one or more of the mobile telecommunication devices to the fan-out server via bidirectional sockets of said XMPP agent and the fan-out server using the XMPP protocol;
cause the XMPP agent of the mobile telecommunication device management server to receive one or more XMPP messages designated for the mobile telecommunication device management server from the fan-out server via the bidirectional sockets of said XMPP agent and the fan-out server using the XMPP protocol;
forward one or more XMPP messages received by the XMPP agent of the mobile telecommunication device management server from the XMPP agent of the mobile telecommunication device management server to the service layer component (132);
cause the service layer component to process one or more XMPP messages forwarded from the XMPP agent of the mobile telecommunication device management server to the service layer component, wherein the processing of said one or more XMPP messages comprises the following in a case when said one or more XMPP messages comprise data generated by execution of one of the commands issued either by one of the users or by the one of the REST clients on one or more of the mobile telecommunication devices for which said command was designated:
retrieving said data from said one or more XMPP messages; and
forwarding at least a portion of said data via the one of the REST APIs to either said user or to said REST client, wherein said REST API was activated upon the receipt of said command;
causing a computer microprocessor of the fan-out server to perform the following:
receive the XMPP messages designated for the mobile telecommunication devices from the XMPP agent (110) of the mobile telecommunication device management server via the bidirectional sockets of the fan-out server and the XMPP agent of the mobile telecommunication device management server using the XMPP protocol;
dispatch the XMPP messages to respective XMPP agents (122) of the designated mobile telecommunication devices (120A....120N) using the XMPP protocol via a cellular digital telecommunication network and bidirectional sockets of said XMPP agents and fan-out server, wherein each mobile telecommunication device has the respective XMPP agent being configured to enable receiving the dispatched XMPP messages designated for the each mobile telecommunication device via the bidirectional sockets of the each mobile telecommunication device when the each mobile telecommunication device is in an on-line state, wherein each XMPP agent of the respective mobile telecommunication device is further configured to cause the respective mobile telecommunication device to perform the following in a case when the each XMPP agent has received one or more dispatched XMPP messages comprising one or more commands:
∘ retrieve one or more commands from said one or more received XMPP messages;
∘ cause said mobile telecommunication device to generate data by executing the one or more retrieved commands on said respective mobile telecommunication device; and
∘ generate one or more XMPP messages comprising the generated data;
persist of the dispatching of the XMPP message to the designated mobile telecommunication device until the state of said designated device is changed from an off-line sate to the on-line state, wherein each mobile telecommunication device has the respective XMPP agent being configured to disable receiving the dispatched XMPP messages designated for the each mobile telecommunication device via the bidirectional sockets of the each mobile telecommunication device when the each mobile telecommunication device is in the off-line state;
receive XMPP messages from the XMPP agents of the mobile telecommunication devices designated for the mobile telecommunication device management server using the XMPP protocol via the cellular digital telecommunication network and the bidirectional sockets of the XMPP agents and the fan-out server, wherein said XMPP messages are generated by the respective mobile telecommunication devices;
forward the XMPP messages received from the XMPP agents of the respective mobile telecommunication devices to the XMPP agent of the mobile telecommunication device management server via bidirectional sockets of the fan-out server and the XMPP agent of the mobile telecommunication device management server using the XMPP protocol.

6. The method of claim 5, wherein at least a portion of users and at least a portion of REST clients are connected to the mobile telecommunication device management server via internet.

7. The method of one of claims 5 or 6, wherein each of at least a portion of the XMPP agents of the respective mobile telecommunications device is further configured to cause the respective mobile telecommunication device to perform the following in a case when the each of at least a portion of the XMPP agents has received one or more XMPP messages comprising one or more commands:
∘ cause said mobile telecommunication device to generate one or more other commands designated for one or more of the mobile telecommunication devices by executing said one or more commands retrieved from said one or more XMPP messages on said respective mobile telecommunication device; and
∘ generate one or more XMPP messages comprising the one or more generated commands;
wherein the processing by the service component layer of one or more XMPP messages comprises the following in a case when said one or more XMPP messages comprise one of the commands designated for one or more of the mobile telecommunication devices:
∘ retrieving said command from said one or more XMPP messages; and
∘ the processing of the retrieved command by the service layer component;
wherein the processing by the service component layer of one or more XMPP messages comprises the following in a case when said one or more XMPP messages comprise data generated by execution of one or more commands on one or more of the mobile telecommunication devices for which said one or more commands generated by one of the mobile telecommunication devices were designated:
∘ retrieving said data from said one or more XMPP messages; and
∘ generating one or more XMPP messages in the format of the XMPP protocol designated for the mobile telecommunication device which has generated said one or more commands, wherein the one or more generated XMPP messages comprise at least a portion of the retrieved data.

8. The method of one of claims 5 - 7, wherein the processing of the command by the service layer component (132) further comprises:
retrieving from a database (150) configuration information of one or more of the mobile telecommunication devices for which said command is designated;
in a case when said command complies with the retrieved configuration information performing of the generating of the one or more XMPP messages in the format of the XMPP protocol, wherein as a result thereof each designated mobile device has at least one respective XMPP message designated for it comprising the command converted by using data being specific for operating of the each designated mobile telecommunication device, otherwise in a case when said command is issued by either one of the users or one of the REST clients sending an error messagevia one of the REST APIs to either said user or said REST client, wherein said REST API was activated upon the receipt of said command, and in a case when said command is generated by one of the mobile telecommunication devices generating an XMPP message comprising an error message designated for the one of the mobile telecommunication devices ;
wherein in a case when as a result of execution on one of the mobile telecommunication devices of one of the commands a configuration of said mobile telecommunication device is changed the data generated as a result of execution of said command on said mobile telecommunication device comprises information representing changes in the configuration of said mobile telecommunication device and the processing of one or more XMPP messages comprising said data by the service layer component comprises the following:
∘ retrieving the information representing changes in the configuration of said mobile telecommunication device from said one or more received XMPP messages; and
∘ updating configuration information of said mobile telecommunication device in the database by using the retrieved information representing changes in the configuration of said mobile telecommunication device.

9. A non-transitory computer readable storage medium embodying a computer program for performing the method of any one of claims 5-8.

## Patentansprüche

1. Server-Cluster, einen Verwaltungsserver (130) für mobile Telekommunikationsvorrichtungen und einen Ausgangsserver (140) aufweisend, wobei der Verwaltungsserver für mobile Telekommunikationsvorrichtungen einen Computer-Mikroprozessor aufweist, der dafür ausgelegt ist:
Befehle zu empfangen, die von Anwendern (135) oder Repräsentationszustandstransfer-, REST-Clients ausgegeben werden und die für mobile Telekommunikationsvorrichtungen vorgesehen sind, um die mobilen Telekommunikationsvorrichtungen zu betreiben, wobei jede mobile Telekommunikationsvorrichtung so ausgelegt ist, dass sie einen oder mehrere Befehle ausführt, die für die einzelnen mobilen Telekommunikationsvorrichtungen vorgesehen sind, und durch Ausführen des einen oder der mehreren Befehle Daten zu erzeugen;
nach Empfangen des Befehls, der von einem der Anwender oder einem der REST-Clients ausgegeben worden ist, eine entsprechende REST-Anwendungsprogramm-Schnittstelle API (131) des Verwaltungsservers für mobile Telekommunikationsvorrichtungen zu aktivieren, wobei die entsprechende REST-API eine Weitergabe des empfangenen Befehls an einen Agenten (110) eines erweiterbaren Nachrichten- und Anwesenheitsprotokolls, XMPP des Verwaltungsservers für mobile Telekommunikationsvorrichtungen ermöglicht, nachdem der Befehl durch eine Dienstschichtkomponente (132) des Verwaltungsservers für mobile Telekommunikationsvorrichtungen verarbeitet worden ist, wobei der Verwaltungsserver für mobile Telekommunikationsvorrichtungen mehrere von den REST-APIs aufweist und die Befehle, die von den Anwendern oder von den REST-Clients ausgegeben werden, in Gruppen eingeteilt werden und jede Gruppe die entsprechende REST-API aufweist;
zu bewirken, dass die Dienstschichtkomponente den Befehl verarbeitet, der für eine oder für mehrere von den mobilen Telekommunikationsvorrichtungen vorgesehen ist, wobei die Verarbeitung des Befehls durch die Dienstschichtkomponente das Erzeugen einer oder mehrerer XMPP-Nachrichten in einem Format des XMPP-Protokolls beinhaltet, wobei als Ergebnis davon für jede vorgesehene mobile Vorrichtung mindestens eine entsprechende XMPP-Nachricht vorgesehen wird, die den Befehl enthält, der unter Verwendung von Daten, die spezifisch sind für den Betrieb der einzelnen vorgesehenen mobilen Telekommunikationsvorrichtung, umgewandelt worden ist;
zu bewirken, dass der XMPP-Agent des Verwaltungsservers für mobile Telekommunikationsvorrichtungen eine oder mehrere XMPP-Nachrichten, die für eine oder mehrere von den mobilen Telekommunikationsvorrichtungen vorgesehen sind, über bidirektionale Sockel des XMPP-Agenten und des Ausgabeservers unter Verwendung des XMPP-Protokolls an den Ausgabeserver schickt;
zu bewirken, dass der XMPP-Agent des Verwaltungsservers für mobile Telekommunikationsvorrichtungen eine oder mehrere XMPP-Nachrichten, die für den Verwaltungsserver für mobile Telekommunikationsvorrichtungen vorgesehen sind, vom Ausgabeserver über die bidirektionalen Sockel des XMPP-Agenten und des Ausgabeservers unter Verwendung des XMPP-Protokolls empfängt;
eine oder mehrere XMPP-Nachrichten, die vom XMPP-Agenten des Verwaltungsservers für mobile Telekommunikationsvorrichtungen empfangen worden sind, vom XMPP-Agenten des Verwaltungsservers für mobile Telekommunikationsvorrichtungen an die Dienstschichtkomponente (132) zu schicken;
zu bewirken, dass die Dienstschichtkomponente eine oder mehrere XMPP-Nachrichten, die vom XMPP-Agenten des Verwaltungsservers für mobile Telekommunikationsvorrichtungen an die Dienstschichtkomponente weitergegeben worden sind, verarbeitet, wobei das Verarbeiten der einen oder der mehreren XMPP-Nachrichten in einem Fall, wo die eine oder die mehreren XMPP-Nachrichten Daten enthalten, die durch Ausführen eines von den Befehlen, die entweder von einem der Anwender oder von einem der REST-Clients erteilt worden sind, an einer oder mehreren von den mobilen Telekommunikationsvorrichtungen, für die der Befehl vorgesehen war, erzeugt worden sind, Folgendes beinhaltet:
Abrufen der Daten aus der einen oder den mehreren XMPP-Nachricht (en) ; und
Weitergeben zumindest eines Teils der Daten über eine von den REST-APIs an entweder den Anwender oder den REST-Client, wobei
die REST-API bei Empfang des Befehls aktiviert worden ist;
wobei der Ausgabeserver einen Computer-Mikroprozessor aufweist, der dafür ausgelegt ist:
die XMPP-Nachrichten, die für die mobilen Telekommunikationsvorrichtungen vorgesehen sind, vom XMPP-Agenten (110) des Verwaltungsservers für mobile Telekommunikationsvorrichtungen über die bidirektionalen Sockel des Ausgabeservers und des XMPP-Agentien des Verwaltungsservers für mobile Telekommunikationsvorrichtungen unter Verwendung des XMPP-Protokolls zu empfangen;
XMPP-Nachrichten an entsprechende XMPP-Agenten (122) der vorgesehenen mobilen Telekommunikationsvorrichtungen (120A... 120N) unter Verwendung des XMPP-Protokolls über ein zelluläres digitales Telekommunikationsnetz und bidirektionale Sockel der XMPP-Agenten und Ausgabeserver zu versenden, wobei jede mobile Telekommunikationsvorrichtung den entsprechenden XMPP-Agenten aufweist, der so ausgelegt ist, dass er einen Empfang der versandten XMPP-Nachrichten, die für die einzelnen mobilen Telekommunikationsvorrichtungen vorgesehen sind, über die bidirektionalen Sockel der einzelnen mobilen Telekommunikationsvorrichtungen ermöglicht, wenn die einzelnen mobilen Telekommunikationsvorrichtungen in einem Online-Zustand sind, wobei jeder XMPP-Agent der einzelnen mobilen Telekommunikationsvorrichtungen ferner dafür ausgelegt ist, zu bewirken, dass die einzelnen mobilen Telekommunikationsvorrichtungen in einem Fall, wo die einzelnen XMPP-Agenten eine oder mehrere versendete XMPP-Nachrichten empfangen haben, die einen oder mehrere Befehle enthalten, Folgendes durchführt:
o Abrufen eines oder mehrerer Befehle aus der einen oder den mehreren empfangenen XMPP-Nachrichten;
o Bewirken, dass die mobile Telekommunikationsvorrichtung durch Ausführen des einen oder der mehreren abgerufenen Befehle auf der entsprechenden mobilen Telekommunikationsvorrichtung Daten erzeugt; und
o Erzeugen einer oder mehrerer XMPP-Nachrichten, welche die erzeugten Daten beinhalten;
mit dem Versand der XMPP-Nachricht an die vorgesehene mobile Telekommunikationsvorrichtung fortzufahren, bis der Zustand der vorgesehenen Vorrichtung von einem Offline-Zustand in den Online-Zustand geändert wird, wobei jede mobile Telekommunikationsvorrichtung den entsprechenden XMPP-Agenten aufweist, der dafür ausgelegt ist, den Empfang der versendeten XMPP-Nachrichten, die für die einzelnen mobilen Telekommunikationsvorrichtungen vorgesehen sind, über die bidirektionalen Sockel der einzelnen mobilen Telekommunikationsvorrichtungen zu verhindern, wenn die einzelnen mobilen Telekommunikationsvorrichtungen im Off-line-Zustand sind;
XMPP-Nachrichten von den XMPP-Agenten der mobilen Telekommunikationsvorrichtungen, die für den Verwaltungsserver für mobile Telekommunikationsvorrichtungen vorgesehen sind, unter Verwendung des XMPP-Protokolls über das zelluläre digitale Telekommunikationsnetz und die bidirektionalen Sockel der XMPP-Agenten und des Ausgabeservers zu empfangen, wobei die XMPP-Nachrichten von den entsprechenden mobilen Telekommunikationsvorrichtungen erzeugt werden;
die XMPP-Nachrichten, die von den XMPP-Agenten der entsprechenden mobilen Telekommunikationsvorrichtungen empfangen werden, an den XMPP-Agenten des Verwaltungsservers für mobile Telekommunikationsvorrichtungen über bidirektionale Sockel des Ausgabeservers und des XMPP-Agenten des Verwaltungsservers für mobile Telekommunikationsvorrichtungen unter Verwendung des XMPP-Protokolls weiterzugeben;

2. Server-Cluster nach Anspruch 1, wobei zumindest manche von den Anwendern und zumindest manche von den REST-Clients über Internet mit dem Verwaltungsserver für mobile Telekommunikationsvorrichtungen verbunden sind.

3. Server-Cluster nach einem der vorangehenden Ansprüche, wobei jeder von den zumindest manchen von den XMPP-Agenten der entsprechenden mobilen Telekommunikationsvorrichtung ferner dafür ausgelegt ist, zu bewirken, dass die entsprechende mobile Telekommunikationsvorrichtung in einem Fall, wo jeder von den zumindest manchen von den XMPP-Agenten eine oder mehrere XMPP-Nachrichten empfangen hat, die einen oder mehrere Befehle beinhalten, Folgendes ausführt:
∘ Bewirken, dass die mobile Telekommunikationsvorrichtung einen oder mehrere andere Befehle für eine oder mehrere von den mobilen Telekommunikationsvorrichtungen erzeugt durch Ausführen des einen oder der mehreren Befehle, die aus der einen oder den mehreren XMPP-Nachrichten abgerufen worden sind, auf der entsprechenden mobilen Telekommunikationsvorrichtung; und
∘ Erzeugen einer oder mehrerer XMPP-Nachrichten, die den einen oder die mehreren erzeugten Befehle beinhalten;
wobei die Verarbeitung einer oder mehrerer XMPP-Nachrichten durch die Dienstkomponentenschicht in einem Fall, wo die mindestens eine XMPP-Nachricht einen von den Befehlen beinhaltet, die für eine oder mehrere von den mobilen Telekommunikationsvorrichtungen vorgesehen sind, Folgendes beinhaltet:
∘ Abrufen des Befehls aus der einen oder den mehreren XMPP-Nachricht (en) ; und
∘ Verarbeiten des abgerufenen Befehls durch die Dienstschichtkomponente;
wobei das Verarbeiten einer oder mehrerer XMPP-Nachrichten durch die Dienstkomponentenschicht in einem Fall, wo die mindestens eine XMPP-Nachricht Daten beinhaltet, die durch Ausführen eines oder mehrerer Befehle auf einer oder mehreren von den mobilen Telekommunikationsvorrichtungen erzeugt worden sind, für die der eine oder die mehreren Befehle, die von einer von den mobilen Telekommunikationsvorrichtungen erzeugt worden sind, vorgesehen gewesen sind, Folgendes beinhaltet:
∘ Abrufen der Daten aus der einen oder den mehreren XMPP-Nachrichten; und
∘ Erzeugen einer oder mehrerer XMPP-Nachrichten im Format des XMPP-Protokolls, das für die mobile Telekommunikationsvorrichtung vorgesehen ist, die den einen oder die mehreren Befehle erzeugt hat, wobei die mindestens eine erzeugte XMPP-Nachricht zumindest einen Teil der abgerufenen Daten beinhaltet,

4. Server-Cluster nach einem der vorangehenden Ansprüche, wobei das Verarbeiten des Befehls durch die Dienstschichtkomponente (132) ferner beinhaltet:
Abrufen von Konfigurationsinformationen einer oder mehrerer der mobilen Telekommunikationsvorrichtungen, für die der Befehl vorgesehen ist, aus einer Datenbank (150);
Ausführen der Erzeugung der einen oder mehreren XMPP-Nachrichten im Format des XMPP-Protokolls, falls der Befehl mit den abgerufenen Konfigurationsinformationen übereinstimmt, wobei als Ergebnis davon jede vorgesehene mobile Vorrichtung mindestens eine entsprechende, für sie vorgesehene XMPP-Nachricht hat, die den Befehl beinhaltet, der unter Verwendung von Daten, die für den Betrieb der einzelnen vorgesehenen mobilen Telekommunikationsvorrichtungen spezifisch sind, erzeugt worden ist, andernfalls, falls der Befehl durch einen von den Anwendern oder einen von den REST-Clients erteilt worden ist, Senden einer Fehlermeldung über eine von den REST-APIs an den Anwender oder den REST-Client, wobei die REST-API bei Empfang des Befehls aktiviert worden ist, und falls der Befehl von einer von den mobilen Telekommunikationsvorrichtungen erzeugt worden ist, Erzeugen einer XMPP-Nachricht, die eine Fehlermeldung beinhaltet, die für die eine von den mobilen Telekommunikationsvorrichtungen vorgesehen ist;
wobei in einem Fall, wo infolge der Ausführung eines der Befehle auf einer von den mobilen Telekommunikationsvorrichtungen eine Konfiguration der mobilen Telekommunikationsvorrichtung geändert wird, die Daten, die infolge der Ausführung des Befehls auf der mobilen Telekommunikationsvorrichtung erzeugt werden, Informationen beinhalten, die Änderungen an der Konfiguration der mobilen Telekommunikationsvorrichtung darstellen, und die Verarbeitung einer oder mehrerer XMPP-Nachrichten, welche die Daten beinhalten, durch die Dienstschichtkomponente Folgendes beinhaltet:
∘ Abrufen der Informationen, die Änderungen an der Konfiguration der mobilen Telekommunikationsvorrichtung darstellen, aus der einen oder den mehreren empfangenen XMPP-Nachrichten; und
∘ Aktualisieren von Konfigurationsinformationen der mobilen Telekommunikationsvorrichtung in der Datenbank unter Verwendung der abgerufenen Informationen, die Änderungen an der Konfiguration der mobilen Telekommunikationsvorrichtung darstellen.

5. Verfahren zum Betreiben eines Server-Clusters, der einen Verwaltungsserver (130) für mobile Telekommunikationsvorrichtungen und einen Ausgabeserver (140) beinhaltet, wobei das Verfahren beinhaltet: Bewirken, dass ein Computer-Prozessor des Verwaltungsservers für mobile Telekommunikationsvorrichtungen Folgendes durchführt:
Empfangen von Befehlen, die von Anwendern (135) oder Repräsentationszustandstransfer-, REST-Clients ausgegeben werden, die für mobile Telekommunikationsvorrichtungen vorgesehen sind, um die mobilen Telekommunikationsvorrichtungen zu betreiben, wobei jede mobile Telekommunikationsvorrichtung so ausgelegt ist, dass sie einen oder mehrere Befehle ausführt, die für die einzelnen mobilen Telekommunikationsvorrichtungen vorgesehen sind, und Erzeugen von Daten durch Ausführen des einen oder der mehreren Befehle;
nach Empfangen des Befehls, der von einem der Anwender oder einem der REST-Clients ausgegeben worden ist, Aktivieren einer entsprechenden REST-Anwendungsprogramm-Schnittstelle API (131) des Verwaltungsservers für mobile Telekommunikationsvorrichtungen, wobei die entsprechende REST-API eine Weitergabe des empfangenen Befehls an einen Agenten (110) eines erweiterbaren Nachrichten- und Anwesenheitsprotokolls, XMPP, des Verwaltungsservers für mobile Telekommunikationsvorrichtungen ermöglicht, nachdem der Befehl durch eine Dienstschichtkomponente (132) des Verwaltungsservers für mobile Telekommunikationsvorrichtungen verarbeitet worden ist, wobei der Verwaltungsserver für mobile Telekommunikationsvorrichtungen mehrere von den REST-APIs aufweist und die Befehle, die von den Anwendern oder von den REST-Clients ausgegeben werden, in Gruppen eingeteilt werden und jede Gruppe die entsprechende REST-API aufweist;
Bewirken, dass die Dienstschichtkomponente den Befehl verarbeitet, der für eine oder mehrere von den mobilen Telekommunikationsvorrichtungen vorgesehen ist, wobei die Verarbeitung des Befehls durch die Dienstschichtkomponente das Erzeugen einer oder mehrerer XMPP-Nachrichten in einem Format des XMPP-Protokolls beinhaltet, wobei als Ergebnis davon für jede vorgesehene mobile Vorrichtung mindestens eine entsprechende XMPP-Nachricht vorgesehen wird, die den Befehl enthält, der unter Verwendung von Daten, die spezifisch sind für den Betrieb der einzelnen vorgesehenen mobilen Telekommunikationsvorrichtungen, umgewandelt worden ist;
Bewirken, dass der XMPP-Agent des Verwaltungsservers für mobile Telekommunikationsvorrichtungen eine oder mehrere XMPP-Nachrichten, die für eine oder mehrere von den mobilen Telekommunikationsvorrichtungen vorgesehen sind, über bidirektionale Sockel des XMPP-Agenten und des Ausgabeservers unter Verwendung des XMPP-Protokolls an den Ausgabeserver schickt;
Bewirken, dass der XMPP-Agent des Verwaltungsservers für mobile Telekommunikationsvorrichtungen eine oder mehrere XMPP-Nachrichten, die für den Verwaltungsserver für mobile Telekommunikationsvorrichtungen vorgesehen sind, vom Ausgabeserver über die bidirektionalen Sockel des XMPP-Agenten und des Ausgabeservers unter Verwendung des XMPP-Protokolls empfängt;
Weitergeben einer oder mehrerer XMPP-Nachrichten, die vom XMPP-Agenten des Verwaltungsservers für mobile Telekommunikationsvorrichtungen empfangen worden sind, vom XMPP-Agenten des Verwaltungsservers für mobile Telekommunikationsvorrichtungen an die Dienstschichtkomponente (132);
Bewirken, dass die Dienstschichtkomponente eine oder mehrere XMPP-Nachrichten, die vom XMPP-Agenten des Verwaltungsservers für mobile Telekommunikationsvorrichtungen an die Dienstschichtkomponente weitergegeben worden sind, verarbeitet, wobei das Verarbeiten der einen oder der mehreren XMPP-Nachrichten in einem Fall, wo die eine oder die mehreren XMPP-Nachrichten Daten enthalten, die durch Ausführen eines von den Befehlen erzeugt worden sind, die entweder von einem der Anwender oder von einem der REST-Clients an einer oder mehreren von den mobilen Telekommunikationsvorrichtungen, für die der Befehl vorgesehen war, erteilt worden sind, Folgendes beinhaltet:
Abrufen der Daten aus der einen oder den mehreren XMPP-Nachrichten; und Weitergeben zumindest eines Teils der Daten über eine von den REST-APIs an entweder den Anwender oder den REST-Client, wobei die REST-API bei Empfang des Befehls aktiviert worden ist;
Bewirken, dass ein Computer-Mikroprozessor des Ausgabeservers Folgendes durchführt:
Empfangen der XMPP-Nachrichten, die für die mobilen Telekommunikationsvorrichtungen vorgesehen sind, vom XMPP-Agenten (110) des Verwaltungsservers für mobile Telekommunikationsvorrichtungen über die bidirektionalen Sockel des Ausgabeservers und des XMPP-Agentien des Verwaltungsservers für mobile Telekommunikationsvorrichtungen unter Verwendung des XMPP-Protokolls;
Versenden der XMPP-Nachrichten an die entsprechenden XMPP-Agenten (122) der vorgesehenen mobilen Telekommunikationsvorrichtungen (120A...120N) unter Verwendung des XMPP-Protokolls über ein zelluläres digitales Telekommunikationsnetz und bidirektionale Sockel der XMPP-Agenten und Ausgabeserver, wobei jede mobile Telekommunikationsvorrichtung den entsprechenden XMPP-Agenten aufweist, der so ausgelegt ist, dass er einen Empfang der versandten XMPP-Nachrichten, die für die einzelnen mobilen Telekommunikationsvorrichtungen vorgesehen sind, über die bidirektionalen Sockel der einzelnen mobilen Telekommunikationsvorrichtung ermöglicht, wenn die einzelnen mobilen Telekommunikationsvorrichtungen in einem Online-Zustand sind, wobei jeder XMPP-Agent der entsprechenden mobilen Telekommunikationsvorrichtungen ferner dafür ausgelegt ist, zu bewirken, dass die entsprechende mobile Telekommunikationsvorrichtung in einem Fall, wo die einzelnen XMPP-Agenten eine oder mehrere versendete XMPP-Nachrichten empfangen haben, die einen oder mehrere Befehle enthalten, Folgendes durchführt:
∘ Abrufen eines oder mehrerer Befehle aus der einen oder den mehreren empfangenen XMPP-Nachrichten;
∘ Bewirken, dass die mobile Telekommunikationsvorrichtung durch Ausführen des einen oder der mehreren abgerufenen Befehle auf der entsprechenden mobilen Telekommunikationsvorrichtung Daten erzeugt; und
∘ Erzeugen einer oder mehrerer XMPP-Nachrichten, welche die erzeugten Daten beinhalten;
Fortfahren, die XMPP-Nachricht an die vorgesehene mobile Telekommunikationsvorrichtung zu versenden, bis der Zustand der vorgesehenen Vorrichtung von einem Offline-Zustand in den Online-Zustand geändert wird, wobei jede mobile Telekommunikationsvorrichtung den entsprechenden XMPP-Agenten aufweist, der dafür ausgelegt ist, den Empfang der versendeten XMPP-Nachrichten, die für die einzelnen mobilen Telekommunikationsvorrichtungen vorgesehen sind, über die bidirektionalen Sockel der einzelnen mobilen Telekommunikationsvorrichtung zu verhindern, wenn die einzelnen mobilen Telekommunikationsvorrichtungen im Offline-Zustand sind;
Empfangen von XMPP-Nachrichten von den XMPP-Agenten der mobilen Telekommunikationsvorrichtungen, die für den Verwaltungsserver für mobile Telekommunikationsvorrichtungen vorgesehen sind, unter Verwendung des XMPP-Protokolls über das zelluläre digitale Telekommunikationsnetz und die bidirektionalen Sockel der XMPP-Agenten und des Ausgabeservers, wobei die XMPP-Nachrichten von den entsprechenden mobilen Telekommunikationsvorrichtungen erzeugt werden;
Weitergeben der XMPP-Nachrichten, die von den XMPP-Agenten der entsprechenden mobilen Telekommunikationsvorrichtungen empfangen werden, an den XMPP-Agenten des Verwaltungsservers für mobile Telekommunikationsvorrichtungen über bidirektionale Sockel des Ausgabeservers und des XMPP-Agenten des Verwaltungsservers für mobile Telekommunikationsvorrichtungen unter Verwendung des XMPP-Protokolls.

6. Verfahren nach Anspruch 5, wobei zumindest manche von den Anwendern und zumindest manche von den REST-Clients über Internet mit dem Verwaltungsserver für mobile Telekommunikationsvorrichtungen verbunden sind.

7. Verfahren nach einem der Ansprüche 5 oder 6, wobei jeder von den zumindest manchen von den XMPP-Agenten der entsprechenden mobilen Telekommunikationsvorrichtung ferner dafür ausgelegt ist, zu bewirken, dass die entsprechende mobile Telekommunikationsvorrichtung in einem Fall, wo die einzelnen von den zumindest manchen von den XMPP-Agenten eine oder mehrere XMPP-Nachrichten empfangen, die einen oder mehrere Befehle beinhaltet, Folgendes ausführt:
∘ Bewirken, dass die mobile Telekommunikationsvorrichtung einen oder mehrere andere Befehle für eine oder mehrere von den mobilen Telekommunikationsvorrichtungen erzeugt durch Ausführen des einen oder der mehreren Befehle, die aus der einen oder den mehreren XMPP-Nachrichten abgerufen worden sind, auf der entsprechenden mobilen Telekommunikationsvorrichtung; und
∘ Erzeugen einer oder mehrerer XMPP-Nachrichten, die den einen oder die mehreren erzeugten Befehle beinhalten;
wobei die Verarbeitung einer oder mehrerer XMPP-Nachrichten durch die Dienstkomponentenschicht in einem Fall, wo die mindestens eine XMPP-Nachricht einen von den Befehlen beinhaltet, die für eine oder mehrere von den mobilen Telekommunikationsvorrichtungen vorgesehen sind, Folgendes beinhaltet:
∘ Abrufen des Befehls aus der einen oder den mehreren XMPP-Nachricht (en) ; und
∘ Verarbeiten des abgerufenen Befehls durch die Dienstschichtkomponente;
wobei das Verarbeiten einer oder mehrerer XMPP-Nachrichten durch die Dienstkomponentenschicht in einem Fall, wo die mindestens eine XMPP-Nachricht Daten beinhaltet, die durch Ausführen eines oder mehrerer Befehle auf einer oder mehreren von den mobilen Telekommunikationsvorrichtungen erzeugt worden sind, für die der eine oder die mehreren Befehle, die von einer von den mobilen Telekommunikationsvorrichtungen erzeugt worden sind, vorgesehen gewesen sind, Folgendes beinhaltet:
=∘ Abrufen der Daten aus der einen oder den mehreren XMPP-Nachrichten; und
∘ Erzeugen einer oder mehrerer XMPP-Nachrichten im Format des XMPP-Protokolls, das für die mobile Telekommunikationsvorrichtung vorgesehen ist, die den einen oder die mehreren Befehle erzeugt hat, wobei die mindestens eine erzeugte XMPP-Nachricht zumindest einen Teil der abgerufenen Daten beinhaltet,

8. Verfahren nach einem der Ansprüche 5-7, wobei das Verarbeiten des Befehls durch die Dienstschichtkomponente (132) ferner beinhaltet:
Abrufen von Konfigurationsinformationen einer oder mehrerer der mobilen Telekommunikationsvorrichtungen, für die der Befehl vorgesehen ist, aus einer Datenbank (150);
Ausführen der Erzeugung der einen oder mehreren XMPP-Nachrichten im Format des XMPP-Protokolls, falls der Befehl mit den abgerufenen Konfigurationsinformationen übereinstimmt, wobei als Ergebnis davon jede vorgesehene Telekommunikationsvorrichtung mindestens eine entsprechende, für sie vorgesehene XMPP-Nachricht hat, die den Befehl beinhaltet, der unter Verwendung von Daten, die für den Betrieb der einzelnen vorgesehenen mobilen Telekommunikationsvorrichtungen spezifisch sind, erzeugt worden ist, andernfalls, falls der Befehl durch einen von den Anwendern oder einen von den REST-Clients erteilt worden ist, Senden einer Fehlermeldung über eine von den REST-APIs an den Anwender oder den REST-Client, wobei die REST-API bei Empfang des Befehls aktiviert worden ist, und falls der Befehl von einer von den mobilen Telekommunikationsvorrichtungen erzeugt worden ist, Erzeugen einer XMPP-Nachricht, die eine Fehlermeldung beinhaltet, die für die eine von den mobilen Telekommunikationsvorrichtungen vorgesehen ist;
wobei in einem Fall, wo infolge der Ausführung eines der Befehle auf einer von den mobilen Telekommunikationsvorrichtungen eine Konfiguration der mobilen Telekommunikationsvorrichtung geändert wird, die Daten, die infolge der Ausführung des Befehls auf der mobilen Telekommunikationsvorrichtung erzeugt werden, Informationen beinhalten, die Änderungen an der Konfiguration der mobilen Telekommunikationsvorrichtung darstellen, und die Verarbeitung einer oder mehrerer XMPP-Nachrichten, welche die Daten beinhalten, durch die Dienstschichtkomponente Folgendes beinhaltet:
∘ Abrufen der Informationen, die Änderungen an der Konfiguration der mobilen Telekommunikationsvorrichtung darstellen, aus der einen oder den mehreren empfangenen XMPP-Nachrichten; und
∘ Aktualisieren von Konfigurationsinformationen der mobilen Telekommunikationsvorrichtung in der Datenbank unter Verwendung der abgerufenen Informationen, die Änderungen an der Konfiguration der mobilen Telekommunikationsvorrichtung darstellen.

9. Nicht-transitorisches, computerlesbares Speichermedium, das ein Computerprogramm zur Ausführung des Verfahrens nach einem der Ansprüche 5-8 verkörpert.

## Revendications

1. Grappe de serveurs comprenant un serveur de gestion d'un dispositif mobile de télécommunication (130) et un serveur de sortance (140), où le serveur de gestion du dispositif mobile comprend un microprocesseur d'ordinateur configuré pour :
recevoir des instructions émises par des utilisateurs (135) ou des clients d'une architecture REST (representational state transfer) destinées aux dispositifs mobiles de télécommunication afin d'exploiter les dispositifs mobiles de télécommunication, où chaque dispositif mobile de télécommunication est configuré pour exécuter une ou plusieurs instructions destinée(s) à chaque dispositif mobile de télécommunication et générer des données par l'exécution de ladite une ou desdites plusieurs instructions ;
dès que la réception des instructions émises, soit par l'un des utilisateurs, soit par l'un des clients REST, activer l'application REST correspondante, le programme connecte l'API (131) du serveur de gestion du dispositif mobile de télécommunication, dans lequel l'API REST correspondant permet le transfert de ladite instruction reçue vers un protocole extensible de présence et de messagerie XMPP, agent (110) du serveur de gestion du dispositif mobile de télécommunication, après traitement de ladite instruction par un composant de la couche de service (132) du serveur de gestion du dispositif mobile de télécommunication, dans lequel le serveur de gestion du dispositif mobile de télécommunication comprend une pluralité d'API REST et les instructions émises par les utilisateurs ou par les clients REST sont rassemblées en groupes et chaque groupe dispose de son API REST correspondant ;
déclencher, par le composant de service de la couche, le traitement de l'instruction destinée à l'un ou plusieurs des dispositifs mobiles de télécommunication, pour lequel(lesquels) le traitement de l'instruction par le composant de la couche de service comprend la création d'un ou de plusieurs messages XMPP dans un format du protocole XMPP, dans lequel(lesquels), en conséquence de ceci, chaque dispositif mobile de destination a au moins un message XMPP correspondant qui lui est destiné comprenant l'instruction convertie en utilisant des données spécifiques pour l'exploitation de chaque dispositif mobile de télécommunication de destination ;
déclencher, par l'agent XMPP du serveur de gestion du dispositif mobile de télécommunication, l'envoi d'un ou de plusieurs messages XMPP attribué(s) à un ou plusieurs dispositifs mobiles de télécommunication vers le serveur de sortance via les connecteurs bidirectionnels dudit agent XMPP et le serveur de sortance en utilisant le protocole XMPP ;
déclencher, par l'agent XMPP du serveur de gestion du dispositif mobile de télécommunication, la réception d'un ou de plusieurs messages XMPP destiné(s) au serveur de gestion du dispositif mobile de télécommunication provenant du serveur de sortance via les connecteurs bidirectionnels dudit agent XMPP et le serveur de sortance en utilisant le protocole XMPP ;
transférer un ou plusieurs messages XMPP reçu(s) par l'agent XMPP du serveur de gestion du dispositif mobile de télécommunication provenant de l'agent XMPP du serveur de gestion du dispositif mobile de télécommunication vers le composant de la couche de service (132) ;
déclencher, par le composant de la couche de service, le traitement d'un ou de plusieurs messages XMPP transféré(s) de l'agent XMPP du serveur de gestion du dispositif mobile de télécommunication vers le composant de la couche de service, où le traitement dudit un ou desdits plusieurs messages XMPP comprend les actions suivantes au cas où ledit un ou lesdits plusieurs messages XMPP contiendraient des données générées par l'exécution de l'une des instructions émises soit par l'un des utilisateurs soit par l'un des clients REST sur l'un ou plusieurs parmi les dispositifs mobiles de télécommunication de destination auquel(auxquels) ladite instruction était destinée ;
récupérer lesdites données dudit un ou desdits plusieurs messages XMPP ; et
transférer au moins une partie desdites données via l'un des API REST soit vers ledit utilisateur, soit vers ledit client REST, où ledit API REST a été activé
dès la réception de ladite instruction ;
où le serveur de sortance comprend un microprocesseur d'ordinateur configuré pour :
recevoir les messages XMPP destinés aux dispositifs mobiles de télécommunication par l'agent XMPP (110) du serveur de gestion du dispositif mobile de télécommunication via les connecteurs bidirectionnels du serveur de sortance et de l'agent XMPP du serveur de gestion du dispositif mobile de télécommunication en utilisant le protocole XMPP ;
distribuer les messages XMPP aux agents XMPP correspondants (122) des dispositifs mobiles de télécommunication désignés (120A,......, 120N) en utilisant le protocole XMPP via un réseau cellulaire de communication digitale et les connecteurs bidirectionnels desdits agents XMPP et du serveur de sortance, où chaque dispositif mobile de télécommunication possède l'agent XMPP correspondant configuré pour permettre la réception des messages XMPP distribués destinés à chaque dispositif mobile de télécommunication via les connecteurs bidirectionnels de chaque dispositif mobile de télécommunication via les connecteurs bidirectionnels de chaque dispositif mobile de télécommunication lorsque chaque dispositif mobile de télécommunication est de statut en ligne, où chaque agent XMPP du dispositif mobile de télécommunication correspondant est en outre configuré pour solliciter le dispositif mobile de télécommunication correspondant pour effectuer les actions suivantes au cas où chaque agent XMPP aurait reçu un ou plusieurs messages XMPP distribué(s) comprenant une ou plusieurs instructions :
• récupérer une ou plusieurs instructions dudit un ou desdits plusieurs messages XMPP ;
• solliciter ledit dispositif mobile de télécommunication pour générer des données en exécutant une ou plusieurs parmi les instructions récupérées sur ledit dispositif mobile de télécommunication correspondant ; et
• générer un ou plusieurs messages XMPP contenant les données générées ;
continuer à distribuer le message XMPP au dispositif mobile de communication de destination jusqu'à ce que l'état dudit dispositif désigné passe du statut hors ligne vers le statut en ligne, où chaque dispositif mobile de télécommunication possède un agent XMPP correspondant configuré pour désactiver la réception des messages XMPP distribués à destination de chaque dispositif mobile de télécommunication via les connecteurs bidirectionnels de chaque dispositif mobile de télécommunication lorsque ce dernier chaque dispositif mobile de télécommunication est dans le statut hors ligne ;
recevoir les messages XMPP des agents XMPP des dispositifs mobiles de télécommunication destinés au serveur de gestion du dispositif mobile de télécommunication en utilisant le protocole XMPP via le réseau cellulaire de communication digitale et les connecteurs bidirectionnels des agents XMPP et le serveur de sortance, où lesdits messages XMPP sont générés par les dispositifs mobiles de télécommunication correspondants ;
transférer les messages XMPP reçus des agents XMPP des dispositifs mobiles de télécommunication correspondants vers l'agent XMPP du serveur de gestion du dispositif mobile de télécommunication via les connecteurs bidirectionnels du serveur de sortance et l'agent XMPP du serveur de gestion du dispositif mobile de télécommunication en utilisant le protocole XMPP.

2. Grappe de serveurs selon la revendication 1, dans laquelle au moins une partie des utilisateurs et au moins une partie des clients REST sont connectés au serveur de gestion du dispositif mobile de télécommunication via Internet.

3. Grappe de serveurs selon 1"une quelconque des revendications précédentes, dans laquelle chacune des parties parmi les au moins une partie des agents XMPP du dispositif mobile de télécommunication correspondant est en outre configurée pour déclencher, par le dispositif mobile de télécommunication correspondant, la réalisation des actions suivantes au cas où chacune parmi les au moins une partie des agents XMPP aurait reçu un ou plusieurs messages XMPP comprenant une ou plusieurs instructions .
• déclencher, par ledit dispositif mobile de télécommunication, la création d'une ou de plusieurs autres instructions à destination de l'un ou de plusieurs dispositifs mobiles de télécommunication en exécutant ladite une ou lesdites plusieurs instructions récupérées à partir dudit un ou desdits plusieurs messages XMPP sur ledit dispositif mobile de télécommunication correspondant ; et
• générer un ou plusieurs messages XMPP contenant l'une ou les plusieurs instructions générées ;
où le traitement par la couche de composants de service de l'un ou des plusieurs messages XMPP comprend les actions suivantes au cas où ledit un ou lesdits plusieurs messages XMPP contiendraient l'une des instructions à destination de l'un ou de plusieurs dispositifs mobiles de télécommunication :
• récupération de ladite instruction à partir dudit un ou desdits plusieurs messages XMPP ; et
• traitement de l'instruction reçue par le composant de la couche de service ;
où le traitement par la couche de composant de service du ou des plusieurs messages XMPP comprend les actions suivantes au cas où ledit un ou lesdits plusieurs messages XMPP contiendraient des données générées en exécutant l'une ou plusieurs des instructions sur l'un ou plusieurs des dispositifs mobiles de télécommunication concerné(s) par ladite une ou plusieurs instructions générées par l'un des dispositifs mobiles de télécommunication :
• récupération desdites données à partir dudit un ou desdits plusieurs messages XMPP ; et
• création d'un ou de plusieurs messages XMPP au format du protocole XMPP utilisé par le dispositif mobile de télécommunication qui a généré ladite une ou lesdites plusieurs instructions, où le ou les plusieurs messages XMPP générés contiennent au moins une partie des données récupérées.

4. Grappe de serveurs selon l'une quelconque des revendications précédentes, où le traitement de l'instruction par le composant de la couche de service (132) comprend en outre :
la récupération à partir d'une base de données (150) des informations de configuration de l'un ou de plusieurs dispositifs mobiles de télécommunication auquel(auxquels) s'adresse ladite instruction ;
dans le cas où ladite instruction est conforme à l'information de configuration récupérée pour réaliser la création du ou de plusieurs messages XMPP dans le format du protocole XMPP, où en conséquence de celui-ci, chaque dispositif mobile de destination a au moins un message XMPP correspondant qui lui est destiné, comprenant l'instruction convertie en utilisant les données spécifiques pour exploiter chaque dispositif mobile de télécommunication autrement qu'en cas d'émission de ladite instruction soit par l'un des utilisateurs, soit par l'un des clients REST,
envoyant un message d'erreur via l'une des API REST soit vers ledit utilisateur, soit vers ledit client REST, où ladite API REST a été activée dès la réception de ladite instruction, et dans le cas où ladite instruction est générée par l'un des dispositifs mobiles de télécommunication générant un message XMPP comprenant un message d'erreur destiné à l'un des dispositifs mobiles de télécommunication ;
où, dans le cas, ou en conséquence, de l'exécution sur l'un des dispositifs mobiles de télécommunication de l'une des instructions, la configuration dudit dispositif mobile de télécommunication est modifiée, les données générées à la suite de l'exécution de ladite instruction sur ledit dispositif mobile de télécommunication comprennent l'information représentant les changements dans la configuration dudit dispositif mobile de télécommunication et le traitement d'un ou de plusieurs messages XMPP comprenant lesdites données par le composant de la couche de service comprennent les actions suivantes:
• récupération de l'information représentant les changements de la configuration dudit dispositif mobile de télécommunication à partir dudit un ou desdits plusieurs messages XMPP ; et
• mise à jour de l'information sur la configuration dudit dispositif mobile de télécommunication dans la base de données en utilisant l'information récupérée représentant les changements dans la configuration dudit dispositif mobile de télécommunication.

5. Procédé d'exploitation d'une grappe de serveurs comprenant un serveur de gestion de dispositif mobile de télécommunication (130) et un serveur de sortance (140), le procédé comprenant :
le déclenchement par le processeur d'ordinateur du serveur de gestion de dispositif mobile de télécommunication pour l'exécution des actions suivantes :
réception des instructions émises par des utilisateurs (135) ou par des clients d'une architecture REST (representational state transfer) à destination des dispositifs mobiles de télécommunication pour l'exploitation des dispositifs mobiles de télécommunication, où chaque dispositif mobile de télécommunication est configuré pour exécuter une ou plusieurs instructions s'adressant à chaque dispositif mobile de télécommunication et générer des données par l'exécution de ladite une ou desdites plusieurs instructions ;
dès la réception de l'instruction émise, soit par l'un des utilisateurs, soit par les clients REST, activation du programme de l'application REST correspondante qui connecte l'API (131) du serveur de gestion du dispositif mobile de télécommunication, où l'API REST correspondante autorise le transfert de ladite instruction reçue vers un protocole extensible de messagerie et de présence, XMPP, agent (110) du serveur de gestion du dispositif mobile de télécommunication, après le traitement de ladite instruction par le composant de la couche de service (132) du serveur de gestion du dispositif mobile de télécommunication, où le serveur de gestion du dispositif mobile de télécommunication comprend une pluralité d'API REST et les instructions émises par les utilisateurs ou par les clients REST sont rassemblées en groupes et chaque groupe dispose de l'API REST correspondant ;
déclenchement, par le composant de la couche de service, de l'exécution de l'instruction à destination de l'un ou de plusieurs dispositifs mobiles de télécommunication, où l'exécution de l'instruction par le composant de la couche de service comprend la création d'un ou de plusieurs messages XMPP dans un format du protocole XMPP, où, en conséquence de ceci, chaque dispositif mobile concerné a au moins un message XMPP correspondant qui lui est destiné comprenant l'instruction convertie en utilisant des données spécifiques pour exploiter chaque dispositif mobile de télécommunication de destination ;
déclenchement, par l'agent XMPP du serveur de gestion du dispositif mobile de télécommunication, de l'envoi d'un ou de plusieurs messages XMPP destiné(s) à l'un ou à plusieurs dispositifs mobiles de télécommunication vers le serveur de sortance via les connecteurs bidirectionnels dudit agent XMPP et le serveur de sortance en utilisant le protocole XMPP ;
déclenchement, par l'agent XMPP du serveur de gestion du dispositif mobile de télécommunication, de la réception d'un ou de plusieurs messages XMPP adressés au serveur de gestion du dispositif mobile de télécommunication à partir du serveur de sortance via les connecteurs bidirectionnels dudit agent XMPP et le serveur de sortance en utilisant le protocole XMPP ;
transfert d'un ou de plusieurs messages XMPP reçus par l'agent XMPP du serveur de gestion du dispositif mobile de télécommunication à partir de l'agent XMPP du serveur de gestion du dispositif mobile de télécommunication vers le composant de la couche de service (132) ;
déclenchement, par le composant de la couche de service, du traitement du ou de plusieurs messages XMPP transférés à partir de l'agent XMPP du serveur de gestion du dispositif mobile de télécommunication vers le composant de la couche de service, où le traitement dudit un ou desdits plusieurs messages XMPP comprend les actions suivantes dans le cas où le, ou plusieurs messages XMPP, contiendraient des données générées par l'exécution de l'une des instructions émises soit par l'un des utilisateurs, soit par l'un des clients REST, sur l'un ou sur plusieurs dispositifs mobiles de communication auquel(auxquels) s'adressait ladite instruction :
récupération desdites données à partir dudit un ou desdits plusieurs messages XMPP ; et
transfert d'au moins une partie desdites données via l'une des API REST soit vers ledit utilisateur soit vers ledit client REST, où ladite API REST a été
activée dès la réception de ladite instruction ;
déclenchement par le microprocesseur de l'ordinateur du serveur de sortance pour l'exécution des actions suivantes :
réception des messages XMPP destinés aux dispositifs mobiles de télécommunication à partir de l'agent XMPP (110) du serveur de gestion du dispositif mobile de télécommunication via les connecteurs bidirectionnels du serveur de sortance et l'agent XMPP du serveur de gestion du dispositif mobile de télécommunication par l'utilisation du protocole XMPP ;
distribution des messages XMPP aux agents XMPP correspondants (122) des dispositifs mobiles de télécommunication de destination (120A,...., 120N) en utilisant le protocole XMPP via un réseau cellulaire de communication digitale et les connecteurs bidirectionnels desdits agents XMPP et le serveur de sortance, où chaque dispositif mobile de télécommunication possède l'agent XMPP correspondant configuré pour permettre la réception des messages XMPP distribués destinés à chaque dispositif mobile de télécommunication via les connecteurs bidirectionnels de chaque dispositif mobile de télécommunication lorsque chaque dispositif mobile de télécommunication est dans le statut en ligne, où chaque agent XMPP du dispositif mobile de télécommunication correspondant est en outre configuré pour le déclenchement par le dispositif mobile de télécommunication correspondant de l'exécution des actions suivantes dans le cas où chaque agent XMPP aurait reçu un ou plusieurs des messages XMPP distribués contenant une ou plusieurs instructions :
• récupération d'une ou des instructions à partir dudit un ou desdits plusieurs messages XMPP reçus ;
• réalisation par le dispositif mobile de télécommunication de la création des données par l'exécution d'une ou de plusieurs instructions sur ledit dispositif mobile de télécommunication correspondant ; et
• création d'un ou de plusieurs messages XMPP comprenant les données générées ;
maintien de la distribution des messages XMPP vers le dispositif mobile de télécommunication de destination jusqu'à ce que l'état dudit dispositif de destination passe du statut hors ligne au statut en ligne, où chaque dispositif mobile de télécommunication possède l'agent XMPP correspondant configuré pour arrêter la réception des messages XMPP distribués destinés à chaque dispositif mobile de télécommunication via les connecteurs bidirectionnels de chaque dispositif mobile de télécommunication lorsque chaque dispositif mobile de télécommunication est dans le statut hors ligne ;
réception des messages XMPP des agents XMPP des dispositifs mobiles de télécommunication destinés au serveur de gestion du dispositif mobile de télécommunication en utilisant le protocole XMPP via le réseau cellulaire de communication digitale et les connecteurs bidirectionnels desdits agents XMPP et le serveur de sortance, où lesdits messages XMPP sont générés par les dispositifs mobiles de télécommunication correspondants ;
transfert des messages XMPP réceptionnés par les agents XMPP des dispositifs mobiles de télécommunication correspondants vers l'agent XMPP du serveur de gestion du dispositif mobile de télécommunication via les connecteurs bidirectionnels du serveur de sortance et de l'agent XMPP du serveur de gestion du dispositif mobile de télécommunication en utilisant le protocole XMPP.

6. Procédé selon la revendication 5, dans lequel au moins une partie des utilisateurs et au moins une partie des clients REST sont connectés au serveur de gestion du dispositif mobile de télécommunication via internet.

7. Procédé selon l'une quelconque des revendications 5 ou 6, dans lequel chacun parmi au moins une partie des agents XMPP du dispositif mobile de télécommunication correspondant est en outre configuré pour permettre au dispositif mobile de télécommunication correspondant d'exécuter les actions suivantes dans le cas où chacun parmi au moins une partie des agents XMPP aurait reçu un ou plusieurs messages XMPP comprenant une ou plusieurs instructions :
• déclenchement par ledit dispositif mobile de télécommunication de la création d'une ou de plusieurs autres instructions destinées à un ou plusieurs dispositifs mobiles de télécommunication par l'exécution de ladite une ou desdites plusieurs instructions récupérées à partir dudit un ou desdits plusieurs messages XMPP sur ledit dispositif mobile de télécommunication correspondant ; et
• création d'un ou de plusieurs messages XMPP comprenant l'une ou plusieurs instructions générées ;
où le traitement par la couche de composant de service du ou des plusieurs messages XMPP comprend les actions suivantes dans le cas où ledit un ou lesdits plusieurs messages XMPP contiendraient l'une des instructions destinée à l'un ou à plusieurs dispositifs mobiles de télécommunication :
• récupération de ladite instruction à partir dudit un ou desdits plusieurs messages XMPP ; et
• traitement de l'instruction récupérée par le composant de la couche de service ;
où le traitement par la couche de composant de service de l'un ou de plusieurs messages XMPP comprend les actions suivantes dans le cas où ledit un ou lesdits plusieurs messages XMPP contiendraient des données générées par l'exécution de l'une ou de plusieurs instructions sur un ou sur plusieurs dispositifs mobiles de télécommunication auxquels ladite une ou desdites plusieurs instructions générées par l'un des dispositifs mobiles de télécommunication étai(en)t destiné(es) :
• récupération desdites données à partir dudit ou desdits messages XMPP ; et
• création d'un ou de plusieurs messages XMPP au format du protocole XMPP destiné(s) au dispositif mobile de télécommunication qui a généré ladite une ou lesdites plusieurs instructions, où le ou les plusieurs messages XMPP créés contiennent au moins une partie des données récupérées.

8. Procédé selon l'une quelconque des revendications 5-7, dans lequel le traitement de l'instruction par le composant de la couche de service (132) comprend en outre :
la récupération à partir de la base de données (150) des informations de configuration de l'un ou de plusieurs parmi les dispositifs mobiles de télécommunication auquel(auxquels) ladite instruction est destinée ;
dans le cas où ladite instruction est conforme aux informations de configuration récupérées d'exécution de la création de l'un ou des plusieurs messages XMPP au format du protocole XMPP, où en conséquence de ceci, chaque dispositif mobile de destination a au moins un message XMPP correspondant lui étant destiné comprenant l'instruction convertie au moyen de données spécifiques pour l'exploitation de chaque dispositif mobile de télécommunication de destination, autrement, dans le cas où ladite instruction est émise, soit par l'un des utilisateurs, soit par l'un des clients REST, en envoyant un message d'erreur via l'une des API REST, soit vers ledit utilisateur, soit vers ledit client REST, où ladite API REST a été activée dès la réception de ladite instruction, et dans le cas où ladite instruction est générée par l'un des dispositifs mobiles de télécommunication en créant un message XMPP comprenant un message d'erreur destiné à l'un des dispositifs mobiles de télécommunication ;
où, dans le cas, en conséquence, de l'exécution sur l'un des dispositifs mobiles de télécommunication de l'une des instructions la configuration dudit dispositif mobile de télécommunication serait modifiée, les données générées en conséquence de l'exécution de ladite instruction sur ledit dispositif mobile de télécommunication contiendraient l'information représentant les changements dans la configuration dudit dispositif mobile de télécommunication et le traitement de l'un ou de plusieurs messages XMPP comprenant lesdites données par le composant de la couche de service comprendrait les actions suivantes :
• récupération de l'information représentant les changements de la configuration dudit dispositif mobile de télécommunication à partir dudit ou desdits plusieurs messages XMPP reçus ; et
• mise à jour des informations sur la configuration dudit dispositif mobile de télécommunication dans la base de données en utilisant l'information récupérée concernant les changements de configuration dudit dispositif mobile de télécommunication.

9. Support de stockage non transitoire lisible par ordinateur englobant un programme d'ordinateur pour réaliser le procédé selon l'une quelconque des revendications 5 à 8.
